(19) Europäisches Patentamt
European Patent Office
Office européen des brevets

(11) **EP 1 322 918 B1**

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(21) Anmeldenummer: **01955194.4**

(22) Anmeldetag: **31.05.2001**

(51) Int Cl.:
*G01D 5/38* *(2006.01)* *G01D 5/245* *(2006.01)*

(86) Internationale Anmeldenummer:
**PCT/DE2001/002107**

(87) Internationale Veröffentlichungsnummer:
**WO 2002/025220 (28.03.2002 Gazette 2002/12)**

(54) **VORRICHTUNG UND VERFAHREN ZUR ERFASSUNG DER ROTATIONSBEWEGUNG EINES UM EINE ACHSE DREHBAR GELAGERTEN ELEMENTES**

DEVICE AND METHOD FOR DETECTING THE ROTATIONAL MOVEMENT OF AN ELEMENT ROTATABLY MOUNTED ABOUT AN AXIS

PROCEDE ET DISPOSITIF POUR DETECTER LE MOUVEMENT DE ROTATION D'UN ELEMENT MONTE EN ROTATION AUTOUR D'UN AXE

(84) Benannte Vertragsstaaten:
**AT BE CH CY DE DK ES FI FR GB GR IE IT LI LU MC NL PT SE TR**

(30) Priorität: **18.09.2000 DE 10047776**

(43) Veröffentlichungstag der Anmeldung:
**02.07.2003 Patentblatt 2003/27**

(73) Patentinhaber: **Dr. Johannes Heidenhain GmbH**
**83301 Traunreut (DE)**

(72) Erfinder: **SCHRÖDER, Wilhelm**
**73054 Eislingen/Fils (DE)**

(56) Entgegenhaltungen:
**EP-A- 0 344 942       EP-A- 0 628 791**
**DE-A- 3 637 410**

## Beschreibung

Die Erfindung betrifft eine Vorrichtung und ein Verfahren zur Erfassung der Rotationsbewegung eines um eine Achse drehbar gelagerten Elementes, insbesondere eines Rundtisches.

Die Erfassung der Rotationsbewegung erfolgt zum Zweck der Bestimmung von Abweichungen gegenüber einer idealen Drehbewegung um eine vorgegebene Achse. Es kann sich beispielsweise um eine sogenannte Kalibrationsmessung handeln, bei der die erfaßten Abweichungen der Rotationsbewegung von einer idealen Drehbewegung zu einer anschließenden Kalibrierung verwendet werden können. D.h. die Kenntnis der auftretenden Abweichungen von einer idealen Drehung kann beim späteren Einsatz des drehbar gelagerten Elementes, z.B. eines Rundtisches oder einer Werkzeugmaschinen-Spindel, rechnerisch berücksichtigt werden.

Die Abweichungen der Drehbewegung eines Rundtisches oder eines anderen drehbar gelagerten Elementes von einer idealen Drehbewegung um eine vorgegebene Achse lassen sich zerlegen in insgesamt sechs Einzelabweichungen, nämlich jeweils drei translatorische und rotatorische Abweichungen.

Aus der DE 36 37 410 C2 sind ein Verfahren und eine Vorrichtung zur Messung von Drehtischabweichungen bekannt, wobei der Drehtisch im Meßvolumen eines Koordinatenmeßgerätes angeordnet ist und die Abweichungen mit Hilfe des Koordinatenmeßgerätes bestimmt werden, indem auf dem Drehtisch ein Prüfkörper befestigt wird, der eine Vielzahl durch Antastflächen gebildeter Meßpunkte trägt, und in verschiedenen Winkelstellungen des Drehtisches jeweils mit dem Koordinatenmeßgerät Sätze von Meßpunktkoordinaten durch Antastung ermittelt werden. Aus diesen Sätzen von Meßpunktkoordinaten werden die Drehtischabweichungen berechnet. Dieses Verfahren hat den Nachteil, daß zur Messung der Drehtischabweichungen eine Antastung des Prüfkörpers erforderlich ist und daß die einzelnen Abweichungen nur in einer Abfolge mehrerer Messungen bestimmt werden können.

In dem Fachbuch Werkzeugmaschinen und Fertigungssysteme, Band 4, VDI-Verlag 1996, Seite 149 ff. ist eine Methode zur Messung der Abweichung rotatorischer Achsen mittels Prüfkugeln oder Prüfzylindern beschrieben. Die dort erwähnten Methoden weisen jedoch den Nachteil auf, daß sie jeweils nur die Ermittlung eines Teiles der sechs Einzelabweichungen gestatten.

Der Erfindung liegt die Aufgabe zugrunde, eine Vorrichtung und ein Verfahren zur Erfassung der Rotationsbewegung eines um eine Achse drehbar gelagerten Elementes zu schaffen, die eine vollständige Bestimmung der auftretenden Einzelabweichungen oder eine Kompensation der Einzelabweichungen während einer Messung ermöglichen.

Diese Aufgabe wird erfindungsgemäß durch die Schaffung einer Vorrichtung mit den Merkmalen des Patentanspruchs 1 sowie eines Verfahrens mit den Merkmalen des Patentanspruches 28 gelöst.

Die erfindungsgemäße Vorrichtung umfaßt eine koaxial zu dem zu messenden Element, z.B. einem Rundtisch, angeordnete Maßverkörperung und zwei an der Maßverkörperung vorgesehene Meßteilungen, die die Drehachse der Maßverkörperung ringförmig umgeben und die zur Abtastung entlang zweier voneinander linear unabhängiger Richtungen ausgebildet sind.

Dabei ist mindestens eine Meßteilung zur Abtastung entlang einer Richtung vorgesehen, die eine Komponente entlang der Drehachse aufweist, und jeder Meßteilung sind mindestens drei entlang des Umfangs der Maßverkörperung voneinander beabstandete Meßköpfe zur Abtastung der jeweiligen Meßteilung zugeordnet.

Bei der Maßverkörperung kann es sich um einen mit dem zu messenden Element verbindbaren Prüfköper handeln. Die Maßverkörperung kann jedoch auch in das zu messende Element (z.B. einen Rundtisch) integriert sein.

Durch Abtastung einer der Meßteilungen mittels dreier entlang des Umfangs der Maßverkörperung voneinander beabstandeter Meßköpfe lassen sich drei linear unabhängige Einzelabweichungen der Rotationsachse bezüglich der vorgegebenen, idealen Achse bestimmen. Da die beiden Meßteilungen wiederum entlang zweier Richtungen abgetastet werden, die linear unabhängig voneinander sind (also nicht durch eine lineare Verknüpfung ineinander überführt werden können), so lassen sich hiermit insgesamt sechs Einzelabweichungen bestimmen, also alle Einzelabweichungen gegenüber einer idealen Drehbewegung um eine vorgegebene Achse ermitteln.

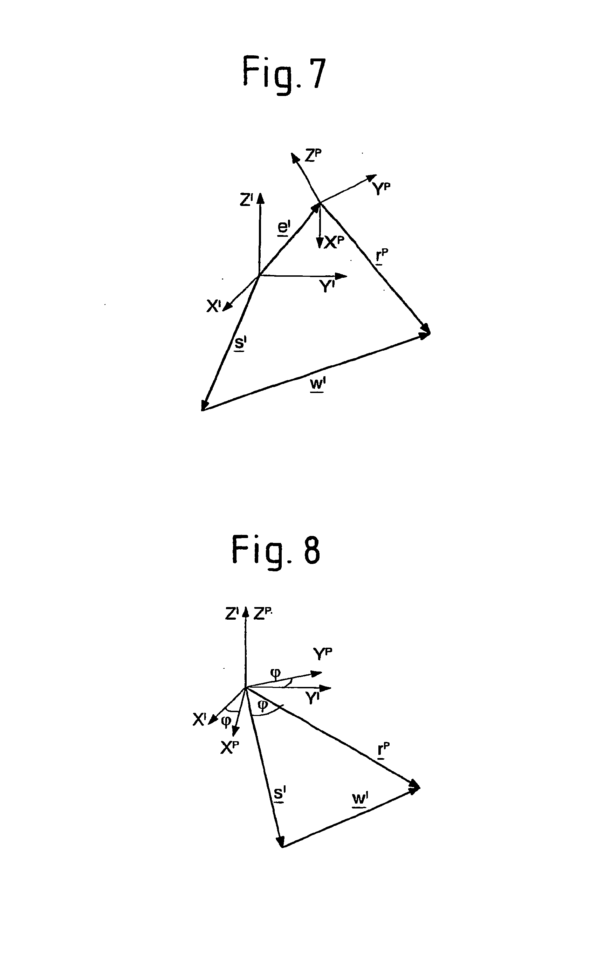

Die Bestimmung der Einzelabweichungen aus den mit der erfindungsgemäßen Vorrichtung meßbaren Werten ist im Einzelnen weiter unten anhand der Figuren 7 und 8 dargelegt.

Die erfindungsgemäße Lösung hat den Vorteil, daß die Bestimmung aller sechs Einzelabweichungen simultan, positionsabhängig und kontinuierlich mit einem Meßaufbau durch ein berührungslos arbeitendes, hochauflösendes und hochgenaues Meßverfahren erfolgen kann. Hierdurch wird mit einer Messung eine vollständigen Kompensation aller Abweichungen von einer idealen Drehbewegung ermöglicht, indem die Einzelabweichungen bei späteren Anwendungen rechnerisch berücksichtigt werden.

Die erfindungsgemäße Vorrichtung ist u.a. verwendbar für Abnahmetests und die Kalibrierung von Rundtischen auf der Grundlage einer statischen oder dynamischen Vermessung des Rundtisches, für die Bestimmung von Positionier- und Umkehrfehlern, für die Durchführung von Step-Response-Tests und für die Bestimmung der thermischen Drift.

Außerdem wird bei einem Einsatz im geregelten Betrieb eine ONLINE-Kompensation von Rundlaufabweichungen ermöglicht. Insbesondere kann gemäß einer Weiterbildung der Erfindung vorgesehen sein, daß mittels der erfindungsgemäßen Vorrichtung unmittelbar eine Korrektur (ONLINE-Korrektur) der Meßwerte vorgenommen wird, die im Betrieb des Rundtisches oder eines sonstigen drehbaren Elementes zur Bestimmung von dessen Position, insbesondere Drehwinkel, ermittelt werden.

In einer bevorzugten Ausführungsform der Erfindung sind die beiden Meßteilungen senkrecht zueinander abtastbar. Werden die beiden Meßteilungen durch Strichteilungen gebildet, so ist dies in einfacher Weise dadurch erreichbar, daß die Striche der einen Meßteilung senkrecht zu den Strichen der anderen Meßteilung verlaufen. Beispielsweise ist eine Meßteilung in axialer Richtung, also parallel zur Drehachse, und die andere Meßteilung in tangentialer Richtung bezüglich der Drehachse abtastbar.

Die Meßteilungen können insbesondere durch inkrementale Meßteilungen gebildet werden; es ist aber auch die Verwendung solcher Meßteilungen ohne weiteres möglich, die eine absolute Positionsinformation liefern.

In einer besonders bevorzugten Ausführungsform der Erfindung werden die beiden Meßteilungen durch eine Kreuzgitterteilung gebildet, die sich auf einer Mantelfläche der Maßverkörperung, insbesondere einer zylinderförmigen Maßver- körperung, entlang dessen Umfang erstreckt. Die Kreuzgitterteilung kann sowohl durch zwei senkrecht zueinander verlaufende Strichteilungen als auch durch eine Schachbretteilung gebildet werden.

Andererseits können die beiden Meßteilungen aber auch räumlich getrennt angeordnet sein, z.B. die eine Meßteilung auf einer Mantelfläche der Maßverkörperung und die andere Meßteilung auf einem von der Mantelfläche nach außen abstehenden, umlaufenden Ring.

Die resultierende Meßrichtung aus den beiden Meßrichtungen, entlang der die Meßteilungen abgetastet werden, bildet mit der Drehachse an jedem Meßpunkt vorzugsweise ein Paar zueinander windschiefer Geraden, d.h. die Gerade, auf der die resultierende Meßrichtung liegt, verläuft weder parallel zu der Drehachse noch schneidet sie letztere.

Mittels einer zusätzlichen Referenzmarkenspur kann der sogenannte langwellige Teilungsfehler unter Verwendung einer Korrekturtabelle kompensiert werden. Darüber hinaus kann der Referenzimpuls zur Triggerung der Messung verwendet werden.

Bei Verwendung einer zylindrischen Maßverkörperung sollte dessen Durchmesser (senkrecht zur Drehachse) möglichst groß gewählt werden, um die Einzelabweichungen mit größtmöglicher Auflösung bestimmen zu können.

Gemäß einer Variante der Erfindung sind zur Abtastung der beiden Meßteilungen drei Meßköpfe vorgesehen, von denen jeder zwei Meßteilungen abtastet. In diesem Fall dienen also dieselben Meßköpfe zur Abtastung beider Meßteilungen. Diese Erfindungsvariante ist insbesondere dann vorteilhaft anwendbar, wenn die beiden Meßteilungen durch eine Kreuzteilung gebildet werden. In diesem Fall werden die drei Meßköpfe als Kreuzgittermeßköpfe ausgebildet, mit denen sich die Kreuzgitterteilung abtasten läßt.

Die drei Meßköpfe werden vorzugsweise - bezogen auf die Drehachse der Maßverkörperung - in einem Abstand von jeweils 120˚ entlang des Umfangs der Maßverkörperung angeordnet.

Nach einer anderen Variante der Erfindung sind sechs Meßköpfe zur Abtastung der beiden Meßteilungen vorgesehen, wobei jeder Meßteilung drei Meßköpfe zugeordnet sind. In diesem Fall tasten beispielsweise drei Meßköpfe die eine Meßteilung in axialer Richtung ab und drei weitere Meßköpfe die andere Meßteilung in axialer Richtung. Dabei werden die zur Abtastung der einen und der anderen Meßteilung vorgesehenen Meßköpfe entlang des Umfangs der Maßverkörperung jeweils abwechselnd hintereinander angeordnet, und zwar vorzugsweise in einem Winkelabstand von jeweils 60˚.

Insbesondere bei der Verwendung von sechs Meßköpfen können diese in einer Weiterbildung der Erfindung vorteilhaft derart miteinander verschaltet werden, daß aus den durch die Ausgangssignale der Meßköpfe erzeugten Meßwerten der einzelnen Meßgrößen unmittelbar die Position, insbesondere der tatsächliche Drehwinkel, des drehbaren Elementes bestimmbar ist, wodurch eine sofortige Korrektur (ONLINE-Korrektur) des durch Toleranzen beeinflußten Positions- bzw. Winkelmeßwertes bei Durchführung einer Messung ermöglicht wird.

Hierzu werden die Meßköpfe derart miteinander verschaltet sind, daß die Meßwerte der zur (axialen) Abtastung der einen Meßteilung vorgesehenen Meßköpfe zur Bildung von Termen zweiter Ordnung miteinander verknüpft werden und daß die Meßwerte der zur (tangentialen) Abtastung der anderen Meßteilung vorgesehenen Meßköpfe linear in die Bestimmung des Drehwinkels eingehen.

Neben den drei bzw. sechs Meßköpfen, die zur Abtastung der beiden Meßteilungen erforderlich sind, kann noch mindestens ein zusätzlicher Meßkopf zur Erzeugung eines redundanten Ausgangssignales vorgesehen sein. So können beispielsweise anstelle dreier Meßköpfe in einem Winkelabstand von jeweils 120˚ vier Meßköpfe in einem Winkelabstand von jeweils 90˚ entlang des Umfangs der Maßverkörperung angeordnet werden. Hierdurch besteht die Möglichkeit zur Kompensation von Fehlern höherer Ordnung, z.B. von Exzentrizitätsfehlern zweiter Ordnung (elliptische Teilung) oder von Planschlag zweiter Ordnung (gebogene Teilung).

Sämtliche Meßköpfe werden vorzugsweise an einem gemeinsamen Halter befestigt, um eine definierte Relativanordnung der Meßköpfe festlegen zu können, wobei der Halter in geeigneter Weise fixiert werden muß, beispielsweise an einer Werkzeugmaschinenspindel im Fall der Vermessung eines Rundtisches.

Das Material des Halters ist derart zu wählen, daß dessen thermisches Ausdehnungsverhalten demjenigen des Trägers der Meßteilung entspricht. Als Träger der Meßteilung kann dabei beispielsweise unmittelbar ein Prüfkörper selbst dienen, oder die Meßteilung ist auf einem separaten, an dem Prüfkörper befestigten Maßband vorgesehen.

Das erfindungsgemäße Verfahren zur Erfassung der Rotationsbewegung eines um eine Achse drehbar gelagerten Elementes ist durch die Merkmale des Anspruchs 28 charakterisiert.

Bei der Durchführung des erfindungsgemäßen Verfahrens wird die Maßverkörperung um ihre Drehachse relativ zu den Stellen (Meßköpfen), an denen die Abtastung der Maßverkörperung erfolgt, gedreht, und zwar vorzugsweise um mindestens eine Umdrehung. Es ist dabei ohne Bedeutung, ob zur Ausführung dieser Relativbewegung die Maßverkörperung oder die zur Abtastung der Maßverkörperung vorgesehenen Mittel (Meßköpfe) bewegt werden.

Das erfindungsgemäße Verfahren eignet sich sowohl zur Bestimmung der Einzelabweichungen des drehbaren Elementes im Rahmen einer Kalibrationsmessung, um diese Einzelabweichungen dann bei späteren Messungen kompensieren zu können, als auch zu einer unmittelbaren, direkten ONLINE-Kompensation der Einzelabweichungen des drehbaren Elementes.

Bevorzugte Weiterbildungen dieses Verfahrens, das insbesondere mit der erfindungsgemäßen Vorrichtung ausgeführt werden kann, sind in den von Anspruch 28 abhängigen Ansprüchen angegeben.

Weitere Merkmale und Vorteile der Erfindung werden bei der nachfolgenden Beschreibung eines Ausführungsbeispiels anhand der Figuren deutlich werden.

Es zeigen:

Fig. 1         - eine perspektivische Darstellung eines auf einem Maschinenbett angeordneten Rundtisches;

Fig. 2         - eine perspektivische Darstellung eines mit einer Kreuzgitterteilung versehenen Prüfkörpers, der zur Bestimmung der Einzelabweichungen der Drehachse des Rundtisches aus Figur 1 mit diesem verbunden werden kann;

Fig. 3         - eine Abwandlung des zylindrischen Prüfkörpers aus Figur 2, der zwei separate Meßteilungen aufweist;

Fig. 4         - eine Anordnung zur Abtastung des Prüfkörpers aus Figur 2;

Fig. 5         - eine weitere Anordnung zur Abtastung des Prüfkörpers aus Figur 2;

Fig. 6a und 6b   - zwei Ansichten eines Spannsystems, mit dem der Prüfkörper an dem zu vermessenden Rundtisch befestigbar ist;

Fig. 7         - eine geometrische Darstellung der Ist-Bewegung eines zu vermessenden Rundtisches;

Fig. 8         - eine geometrische Darstellung der Soll-Bewegung des zu vermessenden Rundtisches;

Fig. 9         - eine Anordnung gemäß Figur 5, die insbesondere zur ONLINE-Korrektur von Einzelabweichungen bei Durchführung einer Messung vorgesehen ist;

Fig. 10        - eine für die ONLINE-Korrektur geeignete Verschaltung der Meßköpfe aus der Anordnung gemäß Fig. 9;

Fig. 11        - eine geometrische Darstellung der Ist-Bewegung eines zu vermessenden Rundtisches, bei dem mittels der Anordnung aus den Figuren 9 und 10 eine ONLINE-Korrektur durchgeführt werden soll.

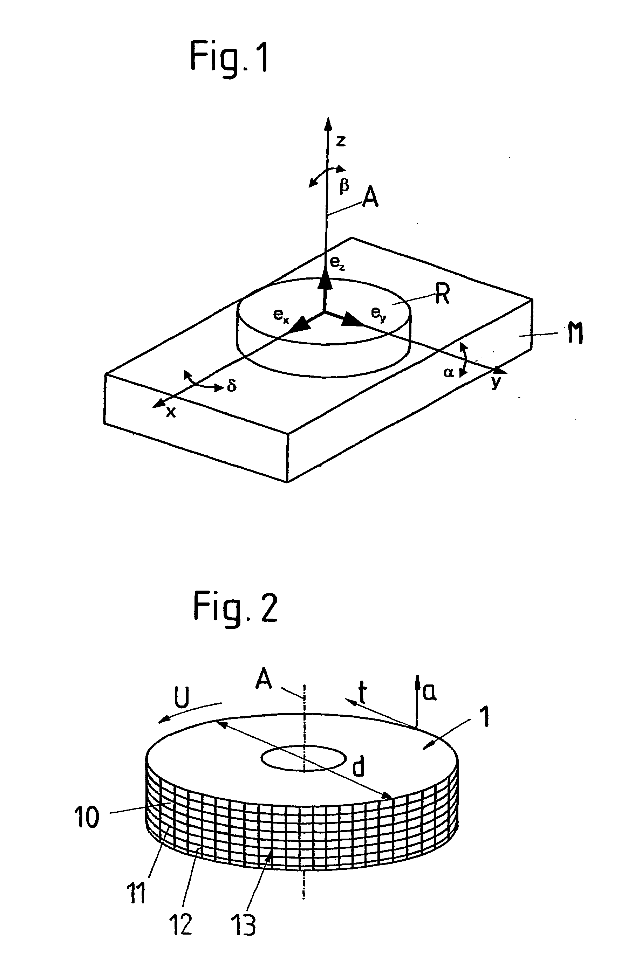

In Figur 1 ist schematisch ein Maschinenbett M mit einem Rundtisch R dargestellt, der eine Rundtischachse A aufweist und der (z.B. zur Bearbeitung eines Werkstückes) gedreht werden kann.

Gegenstand der vorliegenden Erfindung ist die Erfassung einer Drehbewegung um diese Achse A zur Ermittlung der Abweichungen von einer idealen Drehbewegung um eine vorgegebene Soll-Achse. Im Ergebnis werden also die Einzelabweichungen der Rundtischachse A bezüglich einer idealen Achse festgelegt.

Es geht hierbei insbesondere um die Ermittlung systematischer Fehler, die sich bei der Steuerung des Rundtisches systematisch berücksichtigen lassen. Dabei kann die Ermittlung der Einzelabweichungen einerseits im Rahmen einer Kalibrationsmessung erfolgen, um diese bei späteren Messungen unter Verwendung des Rundtisches berücksichtigen zu können, oder andererseits zur unmittelbaren ONLINE-Korrektur bzw. Kompensation der Einzelabweichungen bei Durchführung einer Messung.

Die Einzelabweichungen setzten sich zusammen aus drei sogenannten translatorischen Abweichungen und drei sogenannten rotatorischen Abweichungen.

Eine erste translatorische Abweichung $e_z$ bezieht sich auf die axiale Abweichung entlang der Achse A, die im vorliegendem Beispiel mit der z-Richtung des in Figur 1 dargestellten Koordinatensystems zusammenfällt (lokales Koordinatensystem bzw. nicht-rotierendes Koordinatensystem des Rundtisches).

Zwei weitere translatorische Abweichungen $e_x$ und $e_y$ betreffen die translatorische Abweichung in zwei zueinander senkrechten Raumrichtungen vertikal zur Achse A. Diese beiden Raumrichtungen entsprechen im vorliegendem Beispiel der x-Achse und y-Achse des kartesischen Koordinatensystems, in dem die Achse A die z-Achse definiert. Die durch die beiden letztgenannten Einzelabweichungen $e_x$ und $e_y$ bezeichneten Abweichungen von einer idealen Drehbewegung um eine vorgegebene Sollachse beschreiben die Exzentrizität (Rundlaufabweichung) der tatsächlichen Drehbewegung.

Von den drei rotatorischen Einzelabweichungen bezieht sich die eine ($\delta$) auf die rotatorische Abweichung um die Achse A (z-Achse). Diese Abweichung ($\delta$) wird als Positionierabweichung (Winkelfehler) um die lokale z-Achse bezeichnet.

Die beiden anderen rotatorischen Einzelabweichungen $\alpha$ und $\beta$ bezeichnen die rotatorische Abweichung bezüglich der x-bzw. y-Achse. Derartige Abweichungen führen zu einer Taumelbewegung.

Der Drehwinkelfehler (Positionierabweichung) wird dabei bestimmt durch den Bezug zu einer Führungsgröße, insbesondere durch Bezug auf eine den Rundtisch (und damit auch den mit dem Rundtisch verbundenen Prüfkörper) antreibende Welle.

Zur Erfassung der sechs in Figur 1 dargestellten und vorstehend erläuterten Abweichungen (Bewegungsfehler einer Rotationsbewegung) mit einer Messung kann erfindungsgemäß eine Maßverkörperung in Form eines Prüfkörpers der in Figur 2 dargestellten Art verwendet werden.

Bei diesem Prüfkörper handelt es sich um einen zylindrischen Prüfkörper 1, der zur Bestimmung der Einzelabweichungen mit dem Rundtisch R aus Figur 1 verbunden wird, und zwar derart, daß die Drehachse A (Mittelachse) des zylindrischen Prüfkörpers 1 und die Rundtischachse A zusammenfallen.

Der zylindrische Prüfkörper 1 weist auf seiner äußeren Mantelfläche 10 eine Kreuzgitterteilung 13 auf. Diese besteht aus einer ersten inkrementalen Strichteilung 11, mit einer Vielzahl sich in Umfangsrichtung U des Prüfkörpers 1 erstreckender und in einem konstanten Abstand voneinander angeordneter, paralleler Teilungsstriche. Senkrecht zu den Teilungsstrichen dieser ersten Teilung 11 verlaufen die Teilungsstriche einer zweiten Teilung 12.

Letztere verlaufen jeweils parallel zur Drehachse A des Prüfkörpers 1 (also in axialer Richtung) und sind ebenfalls in einem konstantem Abstand voneinander angeordnet, so daß sich wiederum eine inkrementale Meßteilung ergibt.

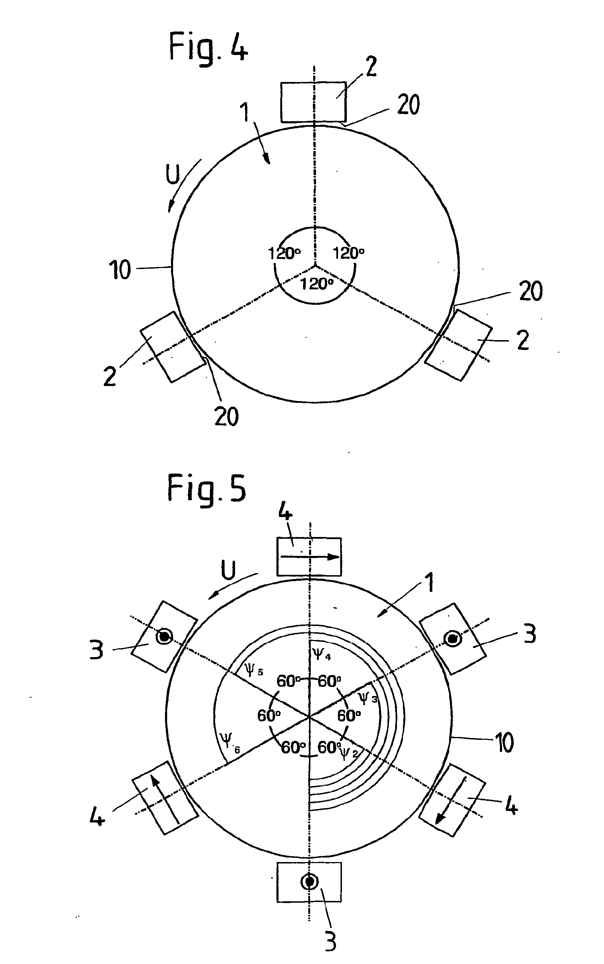

Durch Abtastung der Kreuzgitterteilung 13 mittels geeigneter Meßköpfe lassen sich mit einer einzigen Messung die sechs in Figur 1 dargestellten Einzelabweichungen $e_x$, $e_y$, $e_z$, $\alpha$, $\beta$ und $\delta$ bei einer Drehbewegung um die Achse des Rundtisches R bestimmen, und zwar positionsabhängig für jede Position, die bei der Drehbewegung auftritt. Dies wird nachfolgend anhand der Figuren 4 und 5 noch näher erläutert werden.

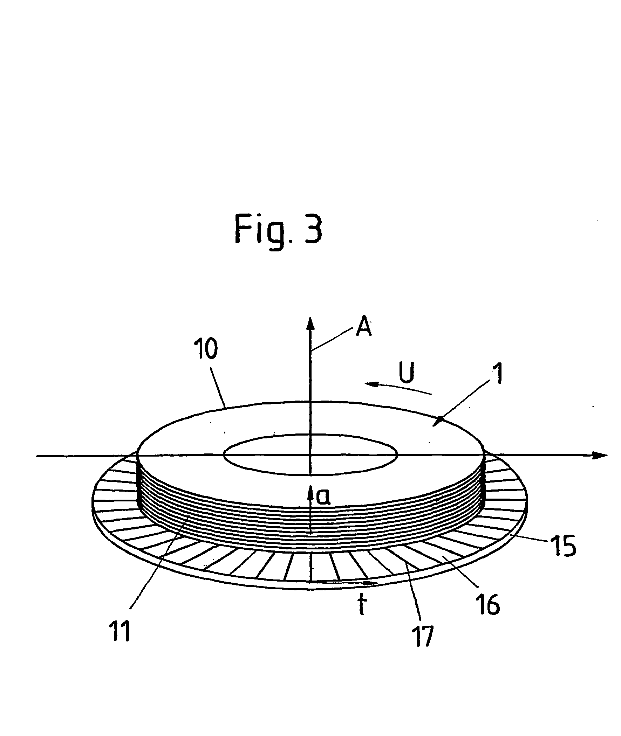

In Figur 3 ist ein weiteres Ausführungsbeispiel eines zylindrischen Prüfkörpers 1 dargestellt. In diesem Fall weist der zylindrische Prüfkörper 1 auf seiner äußeren Mantelfläche 10 lediglich eine Meßteilung 11 auf, die aus einer Mehrzahl entlang der Drehachse A in einem konstanten Abstand voneinander angeordneter und sich entlang des Umfangs U des Prüfkörpers 1 erstreckender Striche besteht.

Eine zweite Meßteilung 17 ist auf einem Ring 15 vorgesehen, der sich entlang des Umfangs des zylinderförmigen Prüfkörpers 1 erstreckt und eine umlaufende, senkrecht von dem Mantel 10 des Prüfkörpers 1 abstehende Fläche 16 bildet. Die auf dieser Fläche 16 vorgesehene Meßteilung 17 besteht aus einer Vielzahl entlang des Umfangs U des Prüfkörpers 1 voneinander beabstandeter Striche, die jeweils in radialer Richtung bezüglich der Drehachse A des zylindrischen Prüfkörpers 1 verlaufen.

Zusammenfassend verlaufen sowohl bei dem Ausführungsbeispiel gemäß Figur 2 als auch bei dem Ausführungsbeispiel gemäß Figur 3 die Striche der einen Meßteilung 11 in Umfangsrichtung des zylindrischen Prüfkörpers 1 und sind in axialer Richtung voneinander beabstandet. Diese Meßteilung 11 läßt sich daher in axialer Richtung a (parallel zur Drehachse) abtasten.

Die Striche der anderen Meßteilung 12 bzw. 17 verlaufen jeweils senkrecht zu den Strichen der ersten Meßteilung 11 und sind entlang des Umfangs U des zylindrischen Prüfkörpers 1 voneinander beabstandet. Die andere Meßteilung 12 bzw. 17 läßt sich daher in tangentialer Richtung t abtasten.

Hierbei ist es allerdings nicht zwingend, daß die Striche der ersten Teilung 11 genau entlang der Umfangsrichtung U und die Striche der zweiten Teilung 12 bzw. 17 senkrecht zu den Strichen der ersten Teilung 11 verlaufen. Vielmehr ist auch ein geneigter Verlauf der Striche der einzelnen Teilungen 11, 12, 17 denkbar. Entscheidend ist allein, daß sich eine Teilung in axialer Richtung und die andere Teilung in einer hierzu senkrechten Richtung abtasten läßt. Hierzu genügt es, wenn die Striche der ersten Teilung 11 eine Komponente entlang des Umfangs U des zylindrischen Prüfkörpers 1 aufweisen und wenn die Striche der anderen Meßteilung 12 bzw. 17 eine Komponente senkrecht zu der Umfangsrichtung U aufweisen.

Die resultierende Meßrichtung aus der axialen und der tangentialen Meßrichtung a bzw. t liegt (an jeder be-

**EP 1 322 918 B1**

liebigen Meßstelle am Umfang des Prüfkörpers 1) jeweils auf einer Geraden, die windschief zu der Drehachse A orientiert ist. D.h. die entsprechende Gerade veläuft weder parallel zur Drehachse noch schneidet sie diese. Auch verläuft die genannte Gerade nicht in einer senkrecht zur Drehachse A liegenden Ebene.

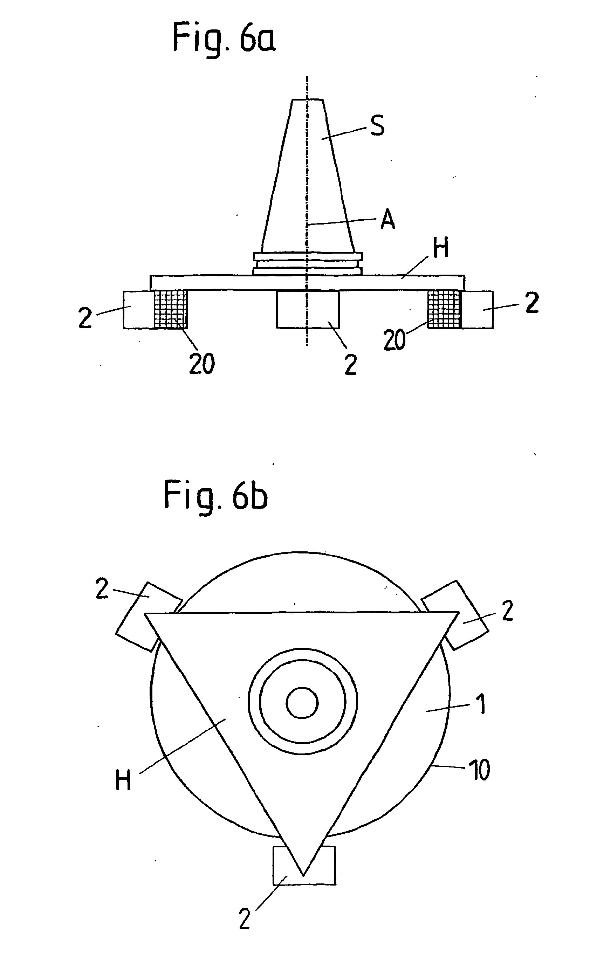

In Figur 4 ist eine Anordnung zur Abtastung des in Figur 2 dargestellten zylindrischen Prüfkörpers 1 mit einem Kreuzgitter 13 dargestellt. Diese Anordnung umfaßt drei entlang des Umfangs U des zylindrischen Prüfkörpers 1 in einem konstanten Winkelabstand von 120˚ voneinander beabstandete Meßköpfe 2 in Form von Kreuzgitterleseköpfen. Diese Meßköpfe 2 weisen auf ihren der Mantelfläche 10 des zylindrischen Prüfkörpers 1 zugewandten Oberflächen 20 jeweils ein Kreuzgitter auf, vergl. hierzu Figur 6a, wo die der Mantelfläche 10 zugewandte Oberfläche 20 der als Kreuzgitterleseköpfe ausgebildeten Meßköpfe 2 erkennbar ist.

Mit jedem dieser Meßköpfe 2 kann die Kreuzteilung 11 auf der Mantelfläche 10 des zylindrischen Prüfkörpers 1 sowohl in tangentialer Richtung t (vergl. Fig. 2) als auch in axialer Richtung (parallel zur Drehachse A) abgetastet werden. Die Abtastung erfolgt hierbei an drei entlang des Umfangs U des zylindrischen Prüfkörpers 1 voneinander beabstandeten Stellen, an denen die drei Meßköpfe 2 plaziert sind.

Bei dem Ausführungsbeispiel gemäß Figur 5 dient zur Abtastung des mit einem Kreuzgitter 13 auf seiner Mantelfläche 10 versehenen zylindrischen Prüfkörpers 1 eine Anordnung von sechs Meßköpfen 3, 4, von denen drei Meßköpfe 3 das Kreuzgitter 13 (vergl. Figur 2) in axialer Richtung abtasten und von denen drei weitere Meßköpfe 4 das Kreuzgitter 13 in tangentialer Richtung abtasten. Die Meßköpfe 3, 4 sind entlang des Umfangs U des zylindrischen Prüfkörpers in regelmäßigen Winkelabständen von 60˚ angeordnet, wobei jeweils axial abtastende Meßköpfe 3 und tangential abtastende Meßköpfe 4 abwechselnd angeordnet sind. Dementsprechend nehmen die in Figur 5 angegebenen Winkel $\psi_2$ bis $\psi_6$ die Werte 60˚, 120˚, 180˚, 240˚ und 300˚ an.

In beiden Fällen, also sowohl bei der Anordnung gemäß Figur 4 als auch bei der Anordnung gemäß Figur 5, lassen sich durch die axiale Abtastung einer Meßteilung insbesondere Informationen über die Einzelabweichungen $e_z$, $\alpha$ und $\beta$ gewinnen, die den Axialfehler und das Taumeln bestimmen, und durch die Abtastung in tangentialer Richtung insbesondere Informationen über die Einzelabweichungen $e_x$, $e_y$ und $\delta$ gewinnen, die die Exzentrizität und die Positionierabweichung (Winkelfehler) bestimmen.

Die Anordnung gemäß Figur 5 ist dabei insbesondere auch zur Abtastung eines Prüfkörpers der in Figur 3 dargestellten Art geeignet, wobei die Abtastflächen der Meßköpfe der jeweils zugeordneten Meßteilung zugewandt sein müssen.

Die Meßköpfe 2 (bzw. 3, 4) werden gemäß den Figuren 6a und 6b vorzugsweise an einem gemeinsamen Halter H befestigt, der eine definierte Relativlage der Meßköpfe 2 sicherstellt. Der Halter H muß von der Drehachse A des zu vermessenden Rundtisches bzw. des Prüfkörpers entkoppelt ortsfest fixiert werden. Er kann hierzu Beispielsweise mittels eines üblichen Spannsystems S bezüglich der Spindel einer Werkzeugmaschine fixiert werden, deren Rundtisch vermessen werden soll.

In Figur 6b ist dabei in einer Draufsicht die Positionierung des dreiecksförmigen Halters H und der daran befestigten drei Meßköpfe 2 bezüglich des Prüfkörpers 1 und dessen äußerer Mantelfläche 10 erkennbar. In der Seitenansicht gemäß Figur 6a ist demgegenüber der Prüfkörper 1 nicht mit dargestellt, um die einzelnen Meßköpfe 2 und deren der Mantelfläche 10 des Prüfkörpers 1 zugewandte Oberflächen 20 (Abtastflächen) besser erkennbar zu machen.

Nachfolgend wird anhand der Figuren 7 und 8 dargelegt werden, wie aus den bei der Ausführung einer Messung mittels der vorstehend beschriebenen Anordnungen gewonnen Meßwerte für sechs Meßgrößen die sechs Einzelabweichungen eines Rundtisches bestimmt werden können.

Zur Durchführung einer Messung mit dem Ziel der Bestimmung der sechs oben definierten Einzelabweichungen wird der Rundtisch relativ zu dem Koordinatensystem eines feststehenden Teiles der entsprechenden Werkzeugmaschine und damit relativ zu dem Koordinatensystem der Meßköpfe um mindestens eine Umdrehung gedreht. Im Idealfall handelt es sich bei der Drehung des Rundtisches um eine reine Drehbewegung um eine vorgegebene Achse. Tatsächlich führt der Rundtisch jedoch infolge von Herstellungs- und Montagetoleranzen eine der reinen Drebewegung überlagerte Störbewegung aus, die ermittelt und kompensiert werden soll.

Die Beschreibung der allgemeinen Drehbewegung des Rundtisches erfordert gemäß den Figuren 7 und 8 zwei Koordinatensysteme, wobei sich Figur 7 auf die Ist-Bewegung und Fig. 8 auf die Soll-Bewegung des Rundtisches bezieht. Das Koordinatensystem I sei hierbei das raumfeste System (Koordinatensystem der entsprechenden Werkzeugaschine bzw. der Meßköpfe), gegenüber dem die Bewegung des Rundtisches beschrieben wird, wobei diesem ein eigenes Koordinatensystem P zugeordnet ist, in dem die Geometrie des Rundtisches definiert ist.

Zwischen diesen beiden Koordinatensystemen besteht die orthogonale Transformation $\underline{\underline{T}}_i^{PI}$, die das Koordinatensystem P in das Koordinatensystem I überführt. Dann ergibt sich die Meßgröße $\underline{w}_i^I$ der Ist-Bewegung aus der nachfolgenden Vektorgleichung

$$\underline{w}_i^I = \underline{e}^I - \underline{s}^I + \underline{\underline{T}}_i^{PI} \cdot \underline{r}^P \tag{1}$$

mit

$\underline{e}^I$     Exzentrizität der Maßverkörperung

$\underline{s}^I$     Koordinaten des Sensorkopfes (Meßkopfes)

$\underline{r}^P$     Radiusvektor der Maßverkörperung

$\underline{\underline{T}}_i^{PI}$     Rotationsmatrix

$\underline{w}_i^I$     Meßgröße der Istbewegung

Die Rotationsmatrix $\underline{\underline{T}}_i^{PI}$ enthält drei Drehparameter $\alpha$, $\beta$ und $\gamma$, die die allgemeine Drehung des Rundtsiches relativ zum Maschinenkoordinatensystem beschreiben. Der Drehwinkel $\gamma$ setzt sich zusammen aus der eigentlichen Meßgröße (Meßwinkel) $\varphi$ und dem Orientierungsfehler $\delta$ ($\gamma=\varphi+\delta$). Betrachtet man insgesamt zunächst nur sehr kleine Drehungen, erhält man die linearisierte Rotationsmatrix $\underline{\underline{T}}_i^{PI}$

$$\underline{\underline{T}}_i^{PI} = \begin{bmatrix} 1 & -(\varphi+\delta) & \beta \\ \varphi+\delta & 1 & -\alpha \\ -\beta & \alpha & 1 \end{bmatrix} \tag{2}$$

Die Sollbewegung des Rundtisches ist durch die Rotation um eine feste Rotationsachse beschrieben. Nach Fig. 8 läßt sich diese Rotation sehr einfach beschreiben

$$\underline{w}_s^I = -\underline{s}^I + \underline{\underline{T}}_s^{PI} \cdot \underline{r}^P \tag{3}$$

mit

$\underline{w}_s^I$     Meßgröße der Sollbewegung

$\underline{\underline{T}}_s^{PI}$     Rotation der Sollbewegung

Betrachtet man auch hier zunächst nur sehr kleine Drehungen, ergibt sich die Rotationsmatrix $\underline{\underline{T}}_s^{PI}$ zu

$$\underline{\underline{T}}_s^{PI} = \begin{bmatrix} 1 & -\varphi & 0 \\ \varphi & 1 & 0 \\ 0 & 0 & 1 \end{bmatrix} \tag{4}$$

Bildet man jetzt die Differenz der Gleichungen (1) und (3) erhält man die Abweichungen der Istbewegung von der Sollbewegung des Rundtisches

$$\widetilde{\underline{w}}^I = \underline{w}_i^I - \underline{w}_s^I = \underline{e}^I + \left(\underline{\underline{T}}_i^{PI} - \underline{\underline{T}}_s^{PI}\right) \cdot \underline{r}^P \tag{5}$$

Die zugehörige Rotationsmatrix ergibt sich zu

$$\widetilde{\underline{\underline{T}}}^{PI} = \underline{\underline{T}}_i^{PI} - \underline{\underline{T}}_s^{PI} = \begin{bmatrix} 0 & -\delta & \beta \\ \delta & 0 & -\alpha \\ -\beta & \alpha & 0 \end{bmatrix} \qquad (6)$$

Bezogen auf das inertiale Koordinatensystem I besitzt der Rundtisch im Sinne der Starrkörperfreiheitsgrade genau sechs Einzelfehler

- Exzentrizität $\underline{e}^I$ : Translatorische Abweichungen in Richtung des Koordinatensystems I

- Winkelfehler $\widetilde{\underline{\underline{T}}}^{PI}$ : Taumelfehler und Orientierungsfehler $\alpha$, $\beta$ und $\delta$

Diese sechs Einzelfehler können mit der beschriebenen Meßanordnung erfaßt werden.
Da das gesamte System linearisiert ist, kann eine Abbildungsvorschrift A gefunden werden, die die geometrischen Abweichungen

$$\underline{\varepsilon} = \begin{pmatrix} e_x & e_y & e_z & \alpha & \beta & \delta \end{pmatrix}^T \qquad (7)$$

auf die Meßgrößen

$$\widetilde{\underline{w}} = \begin{pmatrix} w_{1z} & w_{2y} & w_{3z} & w_{4y} & w_{5z} & w_{6y} \end{pmatrix}^T \qquad (8)$$

gemäß Gleichung (5) abbildet.

$$\widetilde{\underline{w}} = \underline{\underline{A}} \cdot \underline{\varepsilon} \qquad (9)$$

$$\text{mit} \quad \underline{\underline{A}} = \begin{bmatrix} 0 & 0 & 1 & r \cdot S\psi_1 & -r \cdot C\psi_1 & 0 \\ -S\psi_2 & C\psi_2 & 0 & 0 & 0 & r \\ 0 & 0 & 1 & r \cdot S\psi_3 & -r \cdot C\psi_3 & 0 \\ -S\psi_4 & C\psi_4 & 0 & 0 & 0 & r \\ 0 & 0 & 1 & r \cdot S\psi_5 & -r \cdot C\psi_5 & 0 \\ -S\psi_6 & C\psi_6 & 0 & 0 & 0 & r \end{bmatrix}$$

$S[\,]$ sin und $C[\,]$ cos
$\psi_i$ Positionswinkel des i-ten Meßkopfes (Fig.5)

Die Matrix A enthält lediglich geometrische Größen, die sich aus der Meßanordnung ergeben. Invertiert man diese Matrix A, erhält man die Abbildung der Meßfehler $\widetilde{w}$ auf die geometrischen Abweichungen $\varepsilon$ der Meßanordnung

$$\underline{\varepsilon} = \underline{\underline{A}}^{-1} \cdot \widetilde{w} \qquad\qquad (10)$$

mit

$$\underline{\underline{A}}^{-1} = \begin{bmatrix} 0 & \dfrac{C\psi_6 - C\psi_4}{K_1} & 0 & \dfrac{C\psi_2 - C\psi_6}{K_1} & 0 & \dfrac{C\psi_4 - C\psi_2}{K_1} \\[2mm] 0 & \dfrac{S\psi_6 - S\psi_4}{K_1} & 0 & \dfrac{S\psi_2 - S\psi_6}{K_1} & 0 & \dfrac{S\psi_4 - S\psi_2}{K_1} \\[2mm] -\dfrac{S(\psi_3 - \psi_5)}{K_2} & 0 & \dfrac{S(\psi_1 - \psi_5)}{K_2} & 0 & -\dfrac{S(\psi_1 - \psi_3)}{K_2} & 0 \\[2mm] \dfrac{C\psi_5 - C\psi_3}{r \cdot K_2} & 0 & \dfrac{C\psi_1 - C\psi_5}{r \cdot K_2} & 0 & \dfrac{C\psi_3 - C\psi_1}{r \cdot K_2} & 0 \\[2mm] \dfrac{S\psi_5 - S\psi_3}{r \cdot K_2} & 0 & \dfrac{S\psi_1 - S\psi_5}{r \cdot K_2} & 0 & \dfrac{S\psi_3 - S\psi_1}{r \cdot K_2} & 0 \\[2mm] 0 & \dfrac{S(\psi_4 - \psi_6)}{r \cdot K_1} & 0 & -\dfrac{S(\psi_2 - \psi_6)}{r \cdot K_1} & 0 & \dfrac{S(\psi_2 - \psi_4)}{r \cdot K_1} \end{bmatrix}.$$

und

$$K_1 = S(\psi_2 - \psi_4) - S(\psi_2 - \psi_6) + S(\psi_4 - \psi_6)$$

$$K_2 = S(\psi_1 - \psi_5) - S(\psi_1 - \psi_3) - S(\psi_3 - \psi_5)$$

$S[\ ]$ sin und $C[\ ]$ cos

Gleichung (10) beschreibt das eigentliche Kalibrierproblem, mit dem aus den gemessenen Abweichungen auf die geometrischen Abweichungen des Rundtisches geschlossen werden kann.

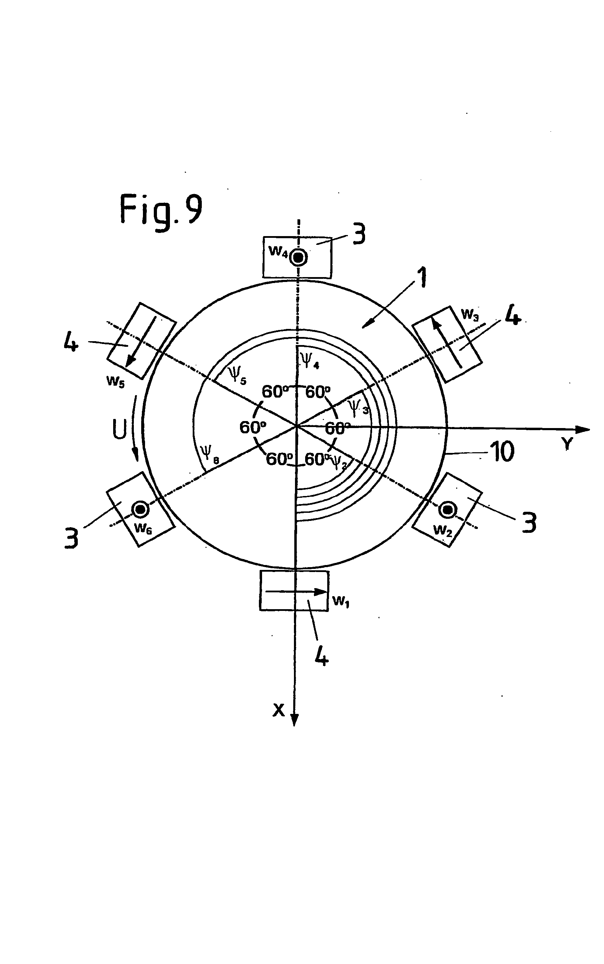

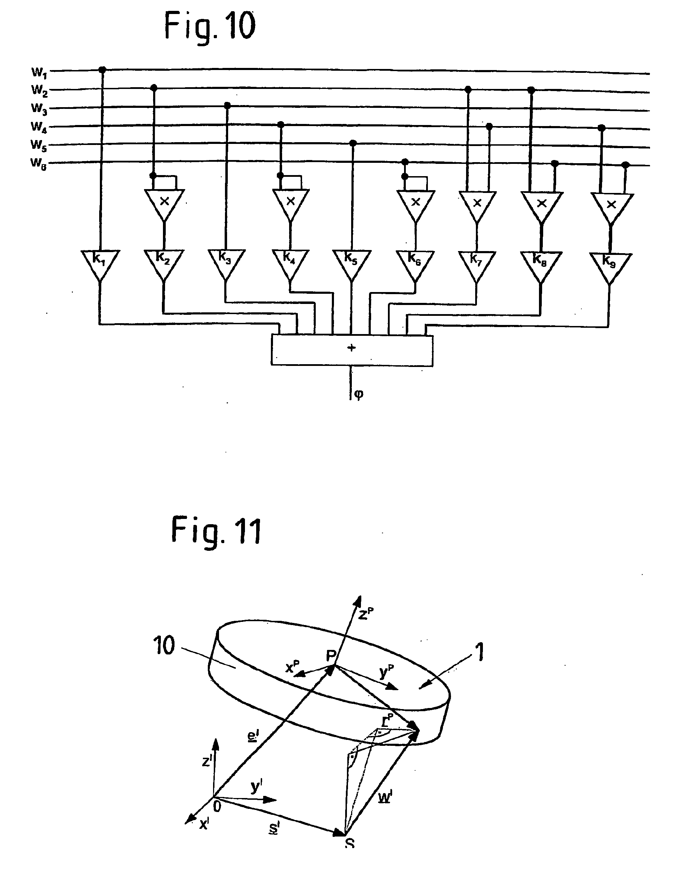

In Figur 9 ist eine der Figur 5 vergleichbare Anordnung von sechs Meßköpfen 3, 4 zur Abtastung des mit einer Kreuzgitterteilung 13 auf seiner Mantelfläche 10 versehenen zylindrischen Prüfkörpers 1 dargestellt, wobei drei Meßköpfe 3 die Kreuzgitterteilung 13 (vergl. Figur 2) in axialer Richtung abtasten und drei weitere Meßköpfe 4 die Kreuzgitterteilung 13 in tangentialer Richtung abtasten. Die Meßköpfe 3, 4 sind entlang des Umfangs U des zylindrischen Prüfkörpers in regelmäßigen Winkelabständen von 60˚ angeordnet, wobei jeweils axial abtastende Meßköpfe 3 und tangential abtastende Meßköpfe 4 abwechselnd angeordnet sind. Dementsprechend nehmen die in Figur 5 angegebenen Winkel $\psi_2$ bis $\psi_6$ die Werte 60˚, 120˚, 180˚, 240˚ und 300˚ an. Eine Besonderheit liegt bei dem in Fig. 9 dargestellten Ausführungsbeispiel in der Verschaltung der Meßköpfe 3, 4, die in Fig. 10 dargestellt ist.

Wie anhand Figur 9 erkennbar, bildet das Ausgangssignal jedes der Meßköpfe 3, 4 einen Meßwert der von den jeweiligen Meßkopf 3, 4 durch Abtastung des Prüfkörpers 1 zu bestimmenden Meßgröße $w_1$, $w_2$, $w_3$, $w_4$, $w_5$ bzw. $w_6$. Gemäß Figur 10 werden die Meßköpfe 3, 4 derart miteinander verschaltet, daß zur Bestimmung des exakten Drehwinkels des Prüfkörpers 1 (und damit auch des hiermit verbundenen Rundtisches) die Meßwerte der Meßgrößen $w_2$, $w_4$, $w_6$ der die Kreuzgitterteilung des Prüfkörpers 1 axial abtastenden Meßköpfe 3 jeweils mit Termen zweiten Ordnung in die Bestimmung des exakten Drehwinkels des Prüfkörpers eingehen. Die Meßwerte der Meßgrößen $w_1$, $w_3$, $w_5$ der die Kreuzgittermeßteilung tangential abtastenden Meßköpfe 4 gehen demgegenüber linear in die entsprechende Gleichung ein. Die genaue Form der erwähnten Gleichung wird weiter unten anhand der Figur 11 abgeleitet werden.

Zuvor sei noch erwähnt, daß mittels der in Figur 9 dargestellten Meßanordnung zur vollständigen Erfassung des Bewegungszustandes eines Prüfkörpers 1 mittels sechs Meßköpfen 3, 4 sowie der in Figur 10 dargestellten Verschaltung der Meßköpfe 3, 4 eine unmittelbare, direkte Kompensation (ONLINE-Kompensation) der Einzelabweichungen gegenüber einer idealen Drehbewegung möglich ist, um so den exakten Drehwinkel zu bestimmen. Dabei werden sowohl fertigungs-, als auch montage- oder betriebsbedingte Einzelabweichungen bzw. Rundlauffehler berücksichtigt. Ein wesentlicher Vorteil des genannten Meßprinzips liegt in Möglichkeit, die Fertigungs-, Montage- und Anbautoleranzen von Winkelmeßgeräten ohne Beeinträchtigung der Meßgenauigkeit großzügiger zu handhaben, das heißt, weniger Aufwand zu deren Beseitigung zu betreiben. Die anhand der Figuren 9 und 10 beschriebene Anordnung mißt auch bei erheblichen Rund- und Planlauffehlern der Maßverkörperung (Prüfkörper 1 mit an seiner Mantelfläche 10 vorgesehener Kreuzgitterteilung 13) stets den genauen Drehwinkel in Abhängigkeit von einer Drehbewegung des Prüfkörpers 1. Voraussetzung hierfür ist lediglich, wie nachfolgend gezeigt werden wird, daß das zu Grunde liegende mathematische Problem linearisiert werden kann, das heißt, daß die auftretenden Einzelabweichungen eine Größe aufweisen, die eine Linearisierung ohne wesentlichen Verlust der Genauigkeit zuläßt.

Im Ergebnis wird also mit der in den Figuren 9 und 10 beschriebenen Anordnung ein Winkelmeßgerät zur direkten Messung des Drehwinkels von Rundtischen geschaffen, das für eine präzise Bestimmung des Drehwinkels nur vergleichsweise geringe Anforderungen an die Fertigungs- und Montagetoleranzen hinsichtlich der Mechanik des Meßgerätes stellt. Denn die Einzelabweichung der Maßverkörperung des Rundtisches (Prüfkörper 1 mit zugeordneter Kreuzgitterteilung), insbesondere die Rundlauf- und Planlauftoleranzen der Maßverkörperung relativ zum Stator des Meßsystems (Meßköpfe zu Abtastung der Kreuzgitterteilung) können durch geeignetes Verschalten vollständig kompensiert werden.

Im Unterschied zu den insbesondere anhand der Figuren 4, 5, 7 und 8 erläuterten Meßverfahren soll hier also nicht zum Zwecke einer vorgeschalteten Kalibrierung lediglich eine Erfassung der Einzelabweichung erfolgen, um diese dann bei späteren Messungen des Drehwinkels berücksichtigen zu können, sondern es kann vielmehr eine unmittelbare Kompensation der Einzelabweichungen bei Durchführung einer Winkelmessung (ONLINE-Kompenation) erfolgen.

Die Gleichung zur Bestimmung des Drehwinkels des Prüfkörpers 1 und damit des zugeordneten drehbaren Elementes (z.B. eines Rundtisches) wird nachfolgend anhand der Figuren 9 und 10 in Verbindung mit Figur 11 abgeleitet werden, in der die Ist-Bewegung eines Prüfkörpers 1 dargestellt ist. Die Ableitung ähnelt der anhand der Figuren 7 und 8 durchgeführten Ableitung des Kalibrierproblems, mit dem auf die geometrischen Abweichungen eines Rundtisches geschlossen werden kann. Ein Unterschied besteht jedoch darin, daß nachfolgend eine Transformation der Meßgröße $w_i$ in das Koordinatensystem des entsprechenden Meßkopfes (Sensorkopfes) erfolgt.

Die Beschreibung der allgemeinen Drehung der Maßverkörperung erfordert gemäß Figur 11 zwei Koordinatensysteme. Das Koordinatensystem I sei das raumfeste System (statorfestes System), gegenüber dem die Bewegung der Maßverkörperung beschrieben werde. Die Geometrie der Maßverkörperung sei durch das Koordinatensystem P definiert. Zwischen diesen beiden Koordinatensystemen bestehe die orthogonale Transformation $T^{PI}$, die das Koordinatensystem P der Maßverkörperung in das Koordinatensystem I überführt. Dann ergibt sich die Meßgröße $w_j$ am j-ten Sensorkopf aus der nachfolgenden Gleichung

$$w_j = \left[ \underline{\underline{T}}^{IS} \cdot \left( \underline{e}^{I} - \underline{s}_j^{I} + \underline{\underline{T}}^{PI} \cdot \underline{r}^{P} \right) \right]^{T} \cdot \underline{n}^{S} \qquad (1')$$

mit

e       Exzentrizität der Maßverkörperung e=$(e_x, e_y, e_z)^T$
s       Koordinaten des Sensorkopfes (Meßkopfes)
r       Radiusvektor der Maßverkörperung
$T^{PI}$   Rotationsmatrix P → I
$T^{IS}$   Rotationsmatrix I → S (S Koordinatensystem des j-ten Sensorkopfes)
$n^S$   Einheitsvektor des Sensorkoordinatensystems in Meßrichtung des Sensorkopfes
$w_j$   Meßgröße der Istbewegung am j-ten Sensorkopf (j=1, ..., 6)

Die Rotationsmatrix $T^{PI}$ enthält drei Drehparameter $\alpha$, $\beta$ und $\gamma = \varphi + \delta$, die die allgemeine Drehung der Maßverkörperung relativ zum Stator beschreiben. Der Vektor e kennzeichnet die Exzentrizität der Maßverkörperung sowie deren Axialbewegung. Insgesamt ergeben sich sechs systematische Abweichungen, die sich fertigungs- oder betriebsbedingt ständig ändern können. Diese sechs Abweichungen werden in dem Vektor e = $(e_x, e_y, e_z, \alpha, \beta, \delta)^T$ zusammengefaßt. Ebenfalls werden die sechs Meßgrößen $w_j$ zu dem Vektor w zusammengefaßt.

Bildet man zu der Gleichung (1') die Jacobimatrix J, erhält man eine Beziehung zwischen den Meßgrößen w und den Abweichungen $\varepsilon$

$$\underline{w} = \underline{\underline{J}} \cdot \underline{\varepsilon} \qquad\qquad (2\,')$$

mit

$$\underline{\underline{J}} = \begin{bmatrix} \dfrac{\partial w_1}{\partial e_x} & \dfrac{\partial w_1}{\partial e_y} & \cdots & \dfrac{\partial w_1}{\partial \delta} \\[2mm] \dfrac{\partial w_2}{\partial e_x} & \dfrac{\partial w_2}{\partial e_y} & \cdots & \dfrac{\partial w_2}{\partial \delta} \\[2mm] \vdots & \vdots & \ddots & \vdots \\[2mm] \dfrac{\partial w_6}{\partial e_x} & \dfrac{\partial w_6}{\partial e_y} & \cdots & \dfrac{\partial w_6}{\partial \delta} \end{bmatrix}$$

Linearisiert man die Jacobimatrix, indem man
$\sin \alpha \approx \alpha$, $\cos \alpha \approx 1$, $\sin \beta \approx \beta$, $\cos, \beta \approx 1$, $\sin \delta \approx \delta$,
$\cos \delta \approx 1$
setzt und Ausdrücke höherer Ordnung als erster Ordnung vernachlässigt, so erhält man

$$\underline{\underline{J}} = \begin{bmatrix} -\sin\psi_1 & \cos\psi_1 & 0 & -r\sin\psi_1(\alpha\cos\psi_1 - \beta\sin\psi_1) & r\sin\psi_1(\beta\cos\psi_1 - \alpha\sin\psi_1) & r \\ 0 & 0 & 1 & r\sin\psi_2 & -r\cos\psi_2 & 0 \\ -\sin\psi_3 & \cos\psi_3 & 0 & -r\sin\psi_3(\alpha\cos\psi_3 - \beta\sin\psi_3) & r\sin\psi_3(\beta\cos\psi_3 - \alpha\sin\psi_3) & r \\ 0 & 0 & 1 & r\sin\psi_4 & -r\cos\psi_4 & 0 \\ -\sin\psi_5 & \cos\psi_5 & 0 & -r\sin\psi_5(\alpha\cos\psi_5 - \beta\sin\psi_5) & r\sin\psi_5(\beta\cos\psi_5 - \alpha\sin\psi_5) & r \\ 0 & 0 & 1 & r\sin\psi_6 & -r\cos\psi_6 & 0 \end{bmatrix}$$

Bildet man jetzt die Inverse der Jacobimatrix erhält man aus Gleichung (2')

$$\underline{\varepsilon} = \underline{\underline{J}}^{-1} \cdot \underline{w} \, . \qquad\qquad (3\,')$$

Da die Jacobimatrix noch die Variablen $\alpha$ und $\beta$ in linearer Form enthält, wird die Gleichung (3) explizit nach den Größen $e_x$, $e_y$, $e_z$, $\alpha$, $\beta$, und $\delta$ aufgelöst und in Abhängigkeit der sechs Meßgrößen w dargestellt. Von besonderem Interesse ist dabei die Darstellung des Positionswinkelfehlers $\delta$ in Abhängigkeit der sechs Meßgrößen w. Man erhält

$$\delta = f(w_1, w_2, w_3, w_4, w_5, w_6) \, . \qquad\qquad (4\,')$$

Zu beachten ist, daß die Meßköpfe, die die Kreuzgittertrommel in axialer Richtung abtasten mittels der Meßgrößen $w_2$, $w_4$, $w_6$, nur Störbewegungen der Teilung messen. Dagegen ist die Störbewegung der Meßgrößen $w_1$, $w_3$, $w_5$, der translatorischen Meßsensoren von der Solldrehbewegung der Teilungstrommel überlagert. Deshalb gilt, daß die Störbewegung in translatorischer Meßrichtung die Differenz zwischen der Sollbewegung $w_{soll}$ und der Istbewegung $\hat{w}$ ist. Es gilt

$$w_j = w_{soll} - \hat{w}_j = r \cdot \varphi - \hat{w}_j \qquad (j = 1, 3, 5) \qquad\qquad (5`)$$

Mit Gleichung (5') folgt aus Gleichung (4'):

$$\delta = f\left(w_1, r\varphi - \hat{w}_2, w_3, r\varphi - \hat{w}_4, w_5, r\varphi - \hat{w}_6\right) \overset{!}{=} 0 . \qquad\qquad (6`)$$

Setzt man in Gleichung (6') den Positionswinkelfehler $\delta$ zu Null und löst die Gleichung nach dem Sollwinkel $\varphi$ auf, so folgt der Sollwinkel $\varphi$ in Abhängigkeit der sechs Meßgrößen w.

$$\varphi = k_1 w_1 + k_2 w_2^2 + k_3 w_3 + k_4 w_4^2 + k_5 w_5 + k_6 w_6^2 + k_7 w_2 w_4 + k_8 w_2 w_6 + k_9 w_4 w_6$$

$$(7`)$$

Die konstanten Faktoren $k_1$ ergeben sich aus der geometrischen Anordnung der Sensoren und dem Teilungsradius r. Sie sind für jeden Anwendungsfall zu errechnen (symbolisch möglich aber sehr komplizierte Ausdrücke).

Die Korrekturgleichung (7') ermöglicht eine ONLINE-Korrektur der Winkelmessung. Durch Fertigungs- und Montagetoleranzen ergeben sich zwangsläufig Meßfehler bei der Winkelmessung. Werden die sechs Störbewegungen durch die Verwendung von sechs Meßköpfen direkt gemessen, können durch geschickte Verschaltung der sechs Einzelmeßgrößen (Figur 10) die Einflüsse der Winkelfehler erster und zweiter Ordnung auf die eigentliche Winkelmessung kompensiert werden. Die Korrekturgleichung liefert für die jeweilige geometrische Meßanordnung den Schaltplan samt Parametrierung für die sechs Meßstellen.

Während die Korrekturgleichung mathematisch eindeutig ist, unterliegen die Parameter $k_i$ in Gl. (7') gewissen Unsicherheiten. Diese Unsicherheiten rühren daher, daß die relative Anordnung der Meßköpfe, im wesentlichen sind dies die Winkel $\psi_j$ der Meßköpfe und der Teilungsradius r (Figur 9), genau bekannt sein muß, um eine genaue bestimmung des Drehwinkels $\varphi$ zu erreichen. Tatsächlich werden auch die Größen $\psi_j$ und r fertigungsbedingten Schwankungen unterliegen. Deshalb empfiehlt es sich, die konstanten Faktoren $k_1$ für eine Sensoranordnung gemäß Figur 9 auf einer Systemmeßmaschine zu identifizieren. Der Vorteil liegt darin, daß dann Teilungsfehler der Teilscheibe, Fertigungs- und Montagefehler der Teilscheibenlagerung sowie Unsicherheiten in der Sensoranordnung vollständig in Gleichung (7') berücksichtigt sind.

Exzentrizitätsfehler wirken sich bei der Winkelmessung als sogenannte $1\varphi$-Fehler aus. Taumelfehler führen dagegen zu $2\varphi$-Fehlern. Für das Korrekturverfahren ist es unwesentlich, ob der Exzentrizitätsfehler ($1\varphi$-Fehler) durch Montage-Fertigungs- oder Anbaufehlern bzw. aus einem langwelligen Teilungsfehler herrührt. Ebenfalls ist es unerheblich, ob der Taumelfehler ($2\varphi$-Fehler) durch Montage-, Fertigungs-oder Anbaufehler bzw. aus einem langwelligen Teilungsfehler resultiert.

Zusammenfassend bietet die anhand der Figuren 9 bis 11 beschriebene Meßanordnung folgende Vorteile:

- Vollständige Kompensation der Meßfehler durch geeignete Verschaltung der sechs Einzelmeßgrößen;
- Für Winkelmeßsysteme mit Eigenlagerung: Hohe Meßgenauigkeit bei Reduktion der Fertigungs- und Montagetoleranzen für die mechanischen Baugruppen (Kostensenkung);
- Für Winkelmeßsysteme ohne Eigenlagerung: Vereinfachte Montage durch reduzierte Anforderungen an die Lauftoleranzen der Anbauteile;
- Erhöhung der thermischen Stabilität, da thermisch bedingte Rundlauf- und Planlaufabweichungen kompensiert werden.

Die Parametrisierung der Schaltung kann dabei einerseits durch rechnerische Ermittlung der Faktoren $k_1$ erfolgen (siehe nachfolgend beschriebenes Beispiel). Oder die Parameter Faktoren $k_1$ werden durch eine meßtechnische Identifikation auf einer Systemmeßmaschine gewonnen. Der Vorteil hierbei liegt in der vollständigen Berücksichtigung von Teilungsfehlern der Teilscheibe, fertigungs- und Montagefehlern der Teilscheibenlagerung sowie Unsicherheiten in der Sensoranordnung.

Die Verwendung zusätzlicher Meßköpfe (über die in Figur 9 gezeigten sechs Meßköpfe hinaus) ermöglicht zusätzlich die Kompensation von Rundlauf- und Planlaufabweichungen höherer Ordnung, z.B. jeweils vier Abtastungen in 90˚ Anordnung tangential und axial (insgesamt acht Abtaststellen).

Nachfolgend eine Anwendung der vorstehend beschriebenen Methoden für ein Winkelmeßsystem der anhand der Figuren 9 bis 11 beschriebenen Art mit Kreuzgitterteilung und sechs Meßköpfen.

Annahmen:

- Radius des Prüfköpers 1: r = 125mm;
- Maßverkörperung: Kreuzgitterteilung auf Zylindermantelfläche des Prüfkörpers;
- Meßanordnung: sechs Kreuzgittermeßköpfe im Abstand von jeweils 60˚, d.h. $\psi_1$=0˚, $\psi_2$=60˚ etc. (vergl. Fig. 9).

Für die Jacobimatrix J folgt dann

$$
\underline{\underline{J}} = \begin{bmatrix}
0 & 1 & 0 & 0 & 0 & 125 \\
0 & 0 & 1 & 108,2532 & -62,5 & 0 \\
-0,866 & -0,5 & 0 & 54,1266\alpha + 93,75\beta & -54,1266\beta - 93,75\alpha & 125 \\
0 & 0 & 1 & 0 & 125 & 0 \\
0,866 & -0,5 & 0 & -54,1266\alpha + 93,75\beta & 54,1266\beta - 93,75\alpha & 125 \\
0 & 0 & 1 & -108,2532 & -62,5 & 0
\end{bmatrix}
$$

Invertiert man die Jacobimatrix und löst Gl.(3) nach den Unbekannten $\varepsilon = (e_1, e_2, e_3, \alpha, \beta, \delta)^T$ auf, erhält man für $\delta$

$$
\begin{aligned}
\gamma = {} & 0,267 \cdot 10^{-2} w_1 - 0,169 \cdot 10^{-14} w_2^2 + 0,267 \cdot 10^{-2} w_3 - \ldots \\
& + 0,912 \cdot 10^{-17} w_4^2 + 0,267 \cdot 10^{-2} w_5 + 0,133 \cdot 10^{-14} w_6^2 + \ldots \\
& + 0,799 \cdot 10^{-14} w_2 w_4 - 0,498 \cdot 10^{-14} w_2 w_6 - 0,246 \cdot 10^{-14} w_4 w_6
\end{aligned}
$$

Unter Verwendung von Gleichung (5') folgt aus Gleichung (6') schließlich der korrigierte (tatsächliche) Drehwinkel $\varphi$ gemäß Gleichung (7').

Für eine Exzentrizität von 0,1 mm liefert das Verfahren einen $1\varphi$-Restfehler von ca. $2,8 \cdot 10^{-8}$ Winkelsekunden und bei einem zusätzlichen Planlauffehler von 0,62 mm am Teilungsumfang ergibt sich ein dominanter $2\varphi$-Restfehler von ca. 1,2 Winkelsekunden.

**Patentansprüche**

1. Vorrichtung zur Erfassung der Rotationsbewegung eines um eine Achse drehbaren Elemente (R), insbesondere eines Rundtisches, mit einer koaxial zu dem Element (R) angeordneten Maßverkörperung (1) und zwei an der Maßverkörperung vorgesehenen Meßteilungen (11, 12; 11, 17), die die Drehachse (A) der Maßverkörperung (1) ringförmig umgeben und die entlang zweier voneinander linear unabhängiger Richtungen (a, t) abtastbar sind, wobei

    a) mindestens eine Meßteilung (11) zur Abtastung entlang einer Richtung (a) vorgesehen ist, die eine Komponente entlang der Drehachse (A) aufweist, und

    b) jeder Meßteilung (11, 12, 17) mindestens drei entlang einer die Drehachse (A) umgebenden Umfangsrichtung (U) voneinander beabstandete Meßköpfe (2, 3, 4) zur Abtastung der jeweiligen Meßteilung (11, 12, 17) zugeordnet sind.

2. Vorrichtung nach Anspruch 1, **dadurch gekennzeichnet, daß** die beiden Meßteilungen (11, 12; 11, 17) durch Strichteilungen gebildet werden.

3. Vorrichtung nach Anspruch 1 oder 2, **dadurch gekennzeichnet, daß** die beiden Meßteilungen (11, 12; 11, 17) senkrecht zueinander abtastbar sind.

4. Vorrichtung nach Anspruch 2 und 3, **dadurch gekennzeichnet, daß** die Striche der einen Meßteilung (11) senkrecht zu den Strichen der anderen Meßteilung (12, 17) verlaufen.

5. Vorrichtung nach einem der Ansprüche 2 bis 4, **dadurch gekennzeichnet, daß** die Striche einer der Meßteilungen (11) parallel zu der Drehachse (A) verlaufen.

6. Vorrichtung nach einem der Ansprüche 2 bis 5, **dadurch gekennzeichnet, daß** die Striche einer der Meßteilungen (12, 17) senkrecht zu der Drehachse (A), insbesondere radial oder in Umfangsrichtung (U), verlaufen.

7. Vorrichtung nach einem der vorhergehenden Ansprüche, **dadurch gekennzeichnet, daß** eine Meßteilung (11) in axialer Richtung (a) und die andere Meßteilung (12, 17) in tangentialer Richtung (t) abtastbar ist.

8. Vorrichtung nach einem der vorhergehenden Ansprüche, **dadurch gekennzeichnet, daß** die Meßteilungen (11, 12, 17) durch inkrementale Meßteilungen gebildet werden.

9. Vorrichtung nach einem der vorhergehenden Ansprüche, **dadurch gekennzeichnet, daß** die beiden Meßteilungen (11, 12) durch eine Kreuzgitterteilung (13) gebildet werden.

10. Vorrichtung nach Anspruch 9, **dadurch gekennzeichnet, daß** sich die Kreuzgitterteilung (13) auf einer Mantelfläche (10) der Maßverkörperung (1) entlang dessen Umfang (U) erstreckt.

11. Vorrichtung nach einem der Ansprüche 1 bis 8, **dadurch gekennzeichnet, daß** die beiden Meßteilungen (11, 17) voneinander räumlich getrennt angeordnet sind.

12. Vorrichtung nach Anspruch 11, **dadurch gekennzeichnet, daß** eine Meßteilung (11) auf der Mantelfläche (10) der Maßverkörperung (1) angeordnet ist und die andere Meßteilung (17) auf einer von der Mantelfläche (10) nach außen abstehenden, umlaufenden Fläche (16).

13. Vorrichtung nach einem der vorhergehenden Ansprüche, **dadurch gekennzeichnet, daß** mittels der Meßköpfe (2, 3, 4) sechs Meßwerte erzeugbar sind, die sechs unabhängige Einzelabweichungen ($e_x$, $e_y$, $e_z$, $\alpha$, $\beta$, $\delta$) der Drehachse (A) repräsentieren.

14. Vorrichtung nach einem der vorhergehenden Ansprüche, **dadurch gekennzeichnet, daß** die resultierende Meßrichtung der beiden Meßrichtungen (a, t) an jedem Meßpunkt jeweils auf einer Geraden liegt, die windschief zu der Drehachse (A) orientiert ist.

15. Vorrichtung nach einem der vorhergehenden Ansprüche, **dadurch gekennzeichnet, daß** zusätzlich zu den Meßteilungen (11, 12, 17) eine Referenzspur an der Maßverkörperung (1) vorgesehen ist.

16. Vorrichtung nach einem der vorhergehenden Ansprüche, **dadurch gekennzeichnet, daß** die Maßverkörperung (1) eine zylindrische Mantelfläche (10) aufweist.

17. Vorrichtung nach einem der vorhergehenden Ansprüche, **dadurch gekennzeichnet, daß** zur Abtastung der Meßteilungen (11, 12, 17) drei Meßköpfe (2) vorgesehen sind, von denen jeder zwei Meßteilungen (11, 12; 11, 17) abtastet.

18. Vorrichtung nach Anspruch 17, **dadurch gekennzeichnet, daß** die Meßköpfe (2) als Kreuzgittermeßköpfe ausgebildet sind.

19. Vorrichtung nach einem der Ansprüche 1 bis 16, **dadurch gekennzeichnet, daß** zur Abtastung der Meßteilungen (11, 12, 17) sechs Meßköpfe (3, 4) vorgesehen sind, von denen drei die eine Meßteilung (11) und drei weitere die andere Meßteilung (12, 17) abtasten.

**20.** Vorrichtung nach Anspruch 19, **dadurch gekennzeichnet, daß** die zur Abtastung der einen und der anderen Meßteilung (11, 12, 17) vorgesehene Meßköpfe (3, 4) jeweils abwechselnd hintereinander angeordnet sind.

**21.** Vorrichtung nach einem der vorhergehenden Ansprüche, **dadurch gekennzeichnet, daß** die Meßköpfe (3, 4) derart miteinander verschaltet sind, daß aus den durch die Ausgangssignale der Meßköpfe (3, 4) erzeugten Meßwerten der Drehwinkel des drehbaren Elementes (1) bestimmbar ist.

**22.** Vorrichtung nach Anspruch 19 oder 20 und Anspruch 21, **dadurch gekennzeichnet, daß** die Meßköpfe (3, 4) derart miteinander verschaltet sind, daß die Meßgrößen ($w_2$, $w_4$, $w_6$) der zur Abtastung der einen Meßteilung (11) vorgesehenen Meßköpfe (3) zur Bildung von Termen zweiter Ordnung in den Meßgrößen miteinander verknüpft werden und daß die Meßgrößen ($w_1$, $w_3$, $w_5$) der zur Abtastung der anderen Meßteilung (12) vorgesehenen Meßköpfe (4) linear in die Bestimmung des Drehwinkels eingehen.

**23.** Vorrichtung nach Anspruch 7 und 22, **dadurch gekennzeichnet, daß** die Meßgrößen ($w_2$, $w_4$, $w_6$) der zur axialen Abtastung der einen Meßteilung (11) vorgesehenen Meßköpfe (3) zur Bildung von Termen zweiter Ordnung in den Meßgrößen miteinander verknüpft werden und daß die Meßgrößen ($w_1$, $w_3$, $w_5$) der zur tangentialen Abtastung der anderen Meßteilung (12) vorgesehenen Meßköpfe (4) linear in die Bestimmung des Drehwinkels eingehen.

**24.** Vorrichtung nach einem der vorhergehenden Ansprüche, **dadurch gekennzeichnet, daß** mindestens ein zusätzlicher Meßkopf zur Erzeugung eines redundanten Ausgangssignales vorgesehen ist.

**25.** Vorrichtung nach einem der vorhergehenden Ansprüche, **dadurch gekennzeichnet, daß** die einzelnen Meßköpfe (2; 3, 4) in konstanten Winkelabständen hintereinander angeordnet sind.

**26.** Vorrichtung nach einem der vorhergehenden Ansprüche, **dadurch gekennzeichnet, daß** die Meßköpfe (2) an einem gemeinsamen Halter (H) angeordnet sind.

**27.** Vorrichtung nach Anspruch 26, **dadurch gekennzeichnet, daß** das thermische Ausdehnungsverhalten des Halters (H) im wesentlichen gleich dem thermischen Ausdehnungsverhalten des Trägers (10, 16) der Meßteilungen (11, 12, 17) ist.

**28.** Verfahren zur Erfassung der Rotationsbewegung eines um eine Achse drehbar gelagerten Elementes, insbesondere eines Rundtisches, unter Verwendung einer koaxial zu dem Element (R) angeordneten Maßverkörperung (1), die zwei Meßteilungen (11, 12; 11, 17) aufweist, die die Drehachse (A) der Maßverkörperung (1) ringförmig umgebend auf diesem angeordnet sind, wobei

a) die beiden Meßteilungen (11, 12; 11, 17) entlang zweier voneinander linear unabhängiger Richtungen (a, t) abgetastet werden,
b) mindestens eine Meßteilung (11) entlang einer Richtung (a) abgetastet wird, die eine Komponente entlang der Drehachse (A) aufweist, und
c) die Abtastung an mindestens drei entlang einer die Drehachse (A) umgebenden Umfangsrichtung (U) voneinander beabstandeten Stellen erfolgt.

**29.** Verfahren nach Anspruch 28, **dadurch gekennzeichnet, daß** das Verfahren zur Bestimmung oder zur Kompensation der Einzelabweichungen des drehbaren Elementes dient.

**30.** Verfahren nach Anspruch 28 oder 29, **dadurch gekennzeichnet, daß** die beiden Meßteilungen (11, 12; 11, 17) entlang zweier senkrecht zueinander verlaufender Richtungen (a, t) abgetastet werden.

**31.** Verfahren nach Anspruch 30, **dadurch gekennzeichnet, daß** eine Meßteilung (11) entlang einer Richtung (a) parallel zur Drehachse (A) und die andere Meßteilung in tangentialer Richtung (t) bezüglich der Drehachse (A) abgetastet wird.

**32.** Verfahren nach einem der Ansprüche 28 bis 31, **dadurch gekennzeichnet, daß** als Meßteilungen (11, 12, 17) inkrementale Meßteilugen verwendet werden.

**33.** Verfahren nach einem der Ansprüche 28 bis 32, **dadurch gekennzeichnet, daß** durch Abtastung der Maßverkörperung (1) sechs Ausgangssignale erzeugt werden, die als Meßgrößen sechs unabhängige Einzelabweichungen

($e_x$, $e_y$, $e_z$, $\alpha$, $\beta$, $\delta$) der Drehachse (A) repräsentieren.

34. Verfahren nach einem der Ansprüche 28 bis 33, **dadurch gekennzeichnet, daß** die resultierende Meßrichtung der beiden Meßrichtungen (a, t) an jedem Meßpunkt jeweils auf einer Geraden liegt, die windschief zu der Drehachse (A) orientiert ist.

35. Verfahren nach einem der Ansprüche 28 bis 34, **dadurch gekennzeichnet, daß** zur Durchführung des Verfahrens die Maßverkörperung (1) um mindestens eine Umdrehung relativ zu den Meßköpfen (2, 3, 4) bewegt wird.

36. Verfahren nach einem der Ansprüche 28 bis 35 unter Verwendung einer Vorrichtung nach einem der Ansprüche 1 bis 27.

37. Verfahren nach Anspruch 36 unter Verwendung einer Vorrichtung nach Anspruch 19 oder 20 und Anspruch 21, **dadurch gekennzeichnet, daß** die Meßgrößen ($w_2$, $w_4$, $w_6$) der zur Abtastung der einen Meßteilung (11) vorgesehenen Meßköpfe (3) zur Bildung von Termen zweiter Ordnung miteinander verknüpft werden und daß die Meßgrößen ($w_1$, $w_3$, $w_5$) der zur Abtastung der anderen Meßteilung (12) vorgesehenen Meßköpfe (4) linear in die Bestimmung des Drehwinkels eingehen.

38. Verfahren nach Anspruch 37, **dadurch gekennzeichnet, daß** die Meßgrößen ($w_2$, $w_4$, $w_6$) von zur axialen Abtastung der einen Meßteilung (11) vorgesehenen Meßköpfen (3) zur Bildung von Termen zweiter Ordnung in den Meßgrößen miteinander verknüpft werden und daß die Meßgrößen ($w_1$, $w_3$, $w_5$) von zur tangentialen Abtastung der anderen Meßteilung (12) vorgesehenen Meßköpfen (4) linear in die Bestimmung des Drehwinkels eingehen.

## Claims

1. Device for detecting the rotational movement of an element (R), in particular a turntable, which is rotatable about an axis, comprising a material measure (1) which is arranged coaxially with the element (R), and two measuring graduations (11, 12; 11, 17) which are provided on the material measure, annularly surround the axis of rotation (A) of the material measure (1) and can be scanned in two linearly mutually independent directions (a, t), wherein

   a) at least one measuring graduation (11) is provided for scanning in a direction (a) which has a component along the axis of rotation (A), and
   b) at least three measuring heads (2, 3, 4), which are spaced apart from each other in a peripheral direction (U) around the axis of rotation (A), are assigned to each measuring graduation (11, 12, 17) for scanning the respective measuring graduation (11, 12, 17).

2. Device according to claim 1, **characterised in that** the two measuring graduations (11, 12; 11, 17) are formed by line graduations.

3. Device according to either claim 1 or claim 2, **characterised in that** the two measuring graduations (11, 12; 11, 17) can be scanned perpendicular to one another.

4. Device according to claim 2 and claim 3, **characterised in that** the lines of one measuring graduation (11) extend perpendicular to the lines of the other measuring graduation (12, 17).

5. Device according to any one of claims 2 to 4, **characterised in that** the lines of one of the measuring graduations (11) extend parallel to the axis of rotation (A).

6. Device according to any one of claims 2 to 5, **characterised in that** the lines of one of the measuring graduations (12, 17) extend perpendicular to the axis of rotation (A), in particular radially or in the peripheral direction (U).

7. Device according to any one of the preceding claims, **characterised in that** one measuring graduation (11) can be scanned in the axial direction (a), and the other measuring graduation (12, 17) can be scanned in the tangential direction (t).

8. Device according to any one of the preceding claims, **characterised in that** the measuring graduations (11, 12, 17) are formed by incremental measuring graduations.

9. Device according to any one of the preceding claims, **characterised in that** the two measuring graduations (11, 12) are formed by a cross-grating graduation (13).

10. Device according to claim 9, **characterised in that** the cross-grating graduation (13) extends on a generated surface (10) of the material measure (1), along the circumference (U) thereof.

11. Device according to any one of claims 1 to 8, **characterised in that** the two measuring graduations (11, 17) are arranged spatially separated from one another.

12. Device according to claim 11, **characterised in that** one measuring graduation (11) is arranged on the generated surface (10) of the material measure (1), and the other measuring graduation (17) is arranged on a circumferential face (16) which projects outwardly from the generated surface (10).

13. Device according to any one of the preceding claims, **characterised in that** by means of the measuring heads (2, 3, 4) six measured values can be generated, which represent six independent individual deviations ($e_x$, $e_y$, $e_z$, $\alpha$, $\beta$, $\delta$) of the axis of rotation (A).

14. Device according to any one of the preceding claims, **characterised in that** the resultant measurement direction of the two measurement directions (a, t) at each measuring point is in each case located on a straight line, which is oriented skewed relative to the axis of rotation (A).

15. Device according to any one of the preceding claims, **characterised in that** in addition to the measuring graduations (11, 12, 17), a reference track is provided on the material measure (1).

16. Device according to any one of the preceding claims, **characterised in that** the material measure (1) has a cylindrical generated surface (10).

17. Device according to any one of the preceding claims, **characterised in that** three measuring heads (2), each of which scans two measuring graduations (11, 12; 11, 17), are provided for scanning the measuring graduations (11, 12, 17).

18. Device according to claim 17, **characterised in that** the measuring heads (2) are formed as cross-grating measuring heads.

19. Device according to any one of claims 1 to 16, **characterised in that** six measuring heads (3, 4), of which three scan one measuring graduation (11) and three others scan the other measuring graduation (12, 17), are provided for scanning the measuring graduations (11, 12, 17).

20. Device according to claim 19, **characterised in that** the measuring heads (3, 4) provided for scanning the one measuring graduation and the other measuring graduation (11, 12, 17) are arranged alternately behind one another.

21. Device according to any one of the preceding claims, **characterised in that** the measuring heads (3, 4) are interconnected in such a way that the angle of rotation of the rotatable element (1) can be determined from the measured values generated by the output signals of the measuring heads (3, 4).

22. Device according to claim 19 or 20 and claim 21, **characterised in that** the measuring heads (3, 4) are interconnected in such a way that the measured quantities ($w_2$, $w_4$, $w_6$) from the measuring heads (3) provided for scanning one measuring graduation (11) are combined to form second-order terms in the measured quantities, and **in that** the measured quantities ($w_1$, $w_3$, $w_5$) from the measuring heads (4) provided for scanning the other measuring graduation (12) are linearly entered into the determination of the angle of rotation.

23. Device according to claims 7 and 22, **characterised in that** the measured quantities ($w_2$, $w_4$, $w_6$) from the measuring heads (3) provided for axially scanning the one measuring graduation (11) are combined to form second-order terms in the measured quantities, and **in that** the measured quantities ($w_1$, $w_3$, $w_5$) from the measuring heads (4) provided for tangentially scanning the other measuring graduation (12) are linearly entered into the determination of the angle of rotation.

24. Device according to any one of the preceding claims, **characterised in that** at least one additional measuring head is provided to generate a redundant output signal.

25. Device according to any one of the preceding claims, **characterised in that** the individual measuring heads (2; 3, 4) are arranged at constant angular distances behind one another.

26. Device according to any one of the preceding claims, **characterised in that** the measuring heads (2) are arranged on a common holder (H).

27. Device according to claim 26, **characterised in that** the thermal expansion behaviour of the holder (H) is substantially identical to the thermal expansion behaviour of the support (10, 16) of the measuring graduations (11, 12, 17).

28. Method for detecting the rotational movement of an element, in particular a turntable, which is rotatable about an axis, using a material measure (1) which is arranged coaxially with the element (R) and has two measuring graduations (11, 12; 11, 17), which are arranged thereon so as to annularly surround the axis of rotation (A) of the material measure (1), wherein

   a) the two measuring graduations (11, 12; 11, 17) are scanned in two linearly mutually independent directions (a, t),
   b) at least one measuring graduation (11) is scanned in a direction (a) which has a component along the axis of rotation (A), and
   c) scanning takes place in at least three locations, which are spaced apart from one another in a peripheral direction (U) around the axis of rotation (A).

29. Method according to claim 28, **characterised in that** the method is used for determining or compensating the individual deviations of the rotatable element.

30. Method according to either claim 28 or claim 29, **characterised in that** the two measuring graduations (11, 12; 11, 17) are scanned in two directions (a, t) which extend perpendicular to one another.

31. Method according to claim 30, **characterised in that** one measuring graduation (11) is scanned in a direction (a) parallel to the axis of rotation (A), and the other measuring graduation is scanned in the tangential direction (t) with respect to the axis of rotation (A).

32. Method according to any one of claims 28 to 31, **characterised in that** incremental measuring graduations are used as the measuring graduations (11, 12, 17).

33. Method according to any one of claims 28 to 32, **characterised in that** six output signals are generated by scanning the material measure (1) and, as measured quantities, represent six independent individual deviations ($e_x$, $e_y$, $e_z$, $\alpha$, $\beta$, $\delta$) of the axis of rotation (A).

34. Method according to any one of claims 28 to 33, **characterised in that** the resultant measurement direction of the two measurement directions (a, t) at each measuring point is in each case located on a straight line, which is oriented skewed with respect to the axis of rotation (A).

35. Method according to any one of claims 28 to 34, **characterised in that** in order to carry out said method, the material measure (1) is moved relative to the measuring heads (2, 3, 4) by at least one revolution.

36. Method according to any one of claims 28 to 35, using a device according to any one of claims 1 to 27.

37. Method according to claim 36, using a device according to claim 19 or 20 and claim 21, **characterised in that** the measured quantities ($w_2$, $w_4$, $w_6$) from the measuring heads (3) provided for axially scanning the one measuring graduation (11) are combined to form second-order terms, and **in that** the measured quantities ($w_1$, $w_3$, $w_5$) from the measuring heads (4) provided for scanning the other measuring graduation (12) are linearly entered into the determination of the angle of rotation.

38. Method according to claim 37, **characterised in that** the measured quantities ($w_2$, $w_4$, $w_6$) from the measuring heads (3) provided for the axial scanning of one measuring graduation (11) are combined to form second-order terms in the measured quantities, and **in that** the measured quantities ($w_1$, $w_3$, $w_5$) from the measuring heads (4) provided for tangentially scanning the other measuring graduation (12) are linearly entered into the determination of the angle of rotation.

**Revendications**

1. Dispositif pour détecter le mouvement de rotation d'un élément (R) monté en rotation autour d'un axe, en particulier d'une table circulaire, comprenant une mesure matérialisée (1), disposée coaxialement avec l'élément (R), et deux divisions de mesure (11, 12; 11, 17) qui sont prévues sur la mesure matérialisée, entourent sous forme de cercle l'axe de rotation (A) de la mesure matérialisée (1) et peuvent être balayées suivant deux directions (a, t) indépendantes l'une de l'autre dans le sens linéaire, où

   a) au moins une division de mesure (11) est prévue pour le balayage suivant une direction (a) qui présente une composante le long de l'axe de rotation (A), et
   b) au moins trois têtes de mesure (2, 3, 4), espacées les unes des autres suivant une direction périphérique (U) entourant l'axe de rotation (A), sont associées à chaque division de mesure (11, 12, 17) aux fins de balayer la division (11, 12, 17) concernée.

2. Dispositif selon la revendication 1, **caractérisé en ce que** les deux divisions de mesure (11, 12; 11, 17) sont formées de divisions à traits.

3. Dispositif selon la revendication 1 ou 2, **caractérisé en ce que** les deux divisions de mesure (11, 12; 11, 17) peuvent être balayées perpendiculairement l'une à l'autre.

4. Dispositif selon les revendications 2 et 3, **caractérisé en ce que** les traits de l'une (11) des divisions de mesure sont perpendiculaires aux traits de l'autre division de mesure (12, 17).

5. Dispositif selon une des revendications 2 à 4, **caractérisé en ce que** les traits de l'une (11) des divisions de mesure sont parallèles à l'axe de rotation (A).

6. Dispositif selon une des revendications 2 à 5, **caractérisé en ce que** les traits de l'une (12, 17) des divisions de mesure sont perpendiculaires à l'axe de rotation (A) et s'étendent notamment dans la direction radiale ou dans la direction périphérique (U).

7. Dispositif selon une des revendications précédentes, **caractérisé en ce qu'**une division de mesure (11) peut être balayée dans la direction axiale (a) et l'autre division de mesure (12, 17) dans la direction tangentielle (t).

8. Dispositif selon une des revendications précédentes, **caractérisé en ce que** les divisions de mesure (11, 12, 17) sont constituées de divisions incrémentales.

9. Dispositif selon une des revendications précédentes, **caractérisé en ce que** les deux divisions de mesure (11, 12) sont formées d'une division à réseaux croisés (13).

10. Dispositif selon la revendication 9, **caractérisé en ce que** la division à réseaux croisés (13) s'étend sur une surface enveloppe (10) de la mesure matérialisée (1), le long de la périphérie (U) de celle-ci.

11. Dispositif selon une des revendications 1 à 8, **caractérisé en ce que** les deux divisions de mesure (11, 17) sont séparées l'une de l'autre dans l'espace.

12. Dispositif selon la revendication 11, **caractérisé en ce qu'**une division de mesure (11) est disposée sur la surface enveloppe (10) de la mesure matérialisée (1) et l'autre division de mesure (17) est disposée sur une surface périphérique (16) qui fait saillie vers l'extérieur depuis la surface enveloppe (10).

13. Dispositif selon une des revendications précédentes, **caractérisé en ce que** les têtes de mesure (2, 3, 4) permettent de générer six valeurs de mesure qui représentent six écarts individuels ($e_x$, $e_y$, $e_z$, $\alpha$, $\beta$, $\delta$) indépendants de l'axe de rotation (A).

14. Dispositif selon une des revendications précédentes, **caractérisé en ce que** la direction de mesure résultant des deux directions de mesure (a, t) se situe en chaque point de mesure respectivement sur une droite qui est gauchie par rapport à l'axe de rotation (A).

15. Dispositif selon une des revendications précédentes, **caractérisé en ce qu'**en plus des divisions de mesure (11, 12, 17), une piste de référence est prévue sur la mesure matérialisée (1).

16. Dispositif selon une des revendications précédentes, **caractérisé en ce que** la mesure matérialisée (1) présente une surface enveloppe (10) cylindrique.

17. Dispositif selon une des revendications précédentes, **caractérisé en ce que** pour balayer les divisions de mesure (11, 12, 17), il est prévu trois têtes de mesure (2) qui balaient chacune deux divisons de mesure (11, 12; 11, 17).

18. Dispositif selon la revendication 17, **caractérisé en ce que** les têtes de mesure (2) sont réalisées sous forme de têtes de mesure à réseaux croisés.

19. Dispositif selon une des revendications 1 à 16, **caractérisé en ce que** pour balayer les divisions de mesure (11, 12, 17), il est prévu six têtes de mesure (3, 4) dont trois balaient une division de mesure (11) et trois autres balaient l'autre division de mesure (12, 17).

20. Dispositif selon la revendication 19, **caractérisé en ce que** les têtes de mesure (3, 4) prévues pour le balayage de l'une et l'autre division de mesure (11, 12, 17) sont disposées en alternance les unes à la suite des autres.

21. Dispositif selon une des revendications précédentes, **caractérisé en ce que** les têtes de mesure (3, 4) sont connectées entre elles de manière à ce que l'angle de rotation de l'élément (1) rotatif puisse être déterminé à partir des valeurs de mesure générées par les signaux de sortie des têtes de mesure (3, 4).

22. Dispositif selon la revendication 19 ou 20 et la revendication 21, **caractérisé en ce que** les têtes de mesure (3, 4) sont connectées entre elles de manière à ce que les grandeurs mesurées ($w_2$, $w_4$, $w_6$) des têtes de mesure (3) prévues pour le balayage de la division de mesure (11) soient combinées entre elles pour former des termes de deuxième ordre dans les grandeurs mesurées et que les grandeurs mesurées ($w_1$, $w_3$, $w_5$) des têtes de mesure (4) prévues pour le balayage de l'autre division de mesure (12) soient prises en compte de façon linéaire dans le calcul de l'angle de rotation.

23. Dispositif selon les revendications 7 et 22, **caractérisé en ce que** les grandeurs mesurées ($w_2$, $w_4$, $w_6$) des têtes de mesure (3) prévues pour le balayage axial de la division de mesure (11) sont combinées entre elles pour former des termes de deuxième ordre dans les grandeurs mesurées, et **en ce que** les grandeurs mesurées ($w_1$, $w_3$, $w_5$) des têtes de mesure (4) prévues pour le balayage tangentiel de l'autre division de mesure (12) sont prises en compte de façon linéaire dans le calcul de l'angle de rotation.

24. Dispositif selon une des revendications précédentes, **caractérisé en ce qu'**il est prévu au moins une tête de mesure supplémentaire pour générer un signal de sortie redondant.

25. Dispositif selon une des revendications précédentes, **caractérisé en ce que** les différentes têtes de mesure (2; 3, 4) sont disposées les unes à la suite des autres, avec des écarts angulaires constants.

26. Dispositif selon une des revendications précédentes, **caractérisé en ce que** les têtes de mesure (2) sont disposées sur un élément de fixation (H) commun.

27. Dispositif selon la revendication 26, **caractérisé en ce que** le comportement de dilatation thermique de l'élément de fixation (H) est sensiblement identique au comportement de dilatation thermique du support (10, 16) des divisions de mesure (11,12,17).

28. Procédé pour détecter le mouvement de rotation d'un élément monté en rotation autour d'un axe, en particulier d'une table circulaire, en utilisant une mesure matérialisée (1) qui est disposée coaxialement avec l'élément (R) et présente deux divisions de mesure (11, 12; 11, 17) qui sont prévues sur la mesure matérialisée (1), en entourant sous une forme annulaire l'axe de rotation (A) de celle-ci, où

    a) les deux divisions de mesure (11, 12; 11, 17) sont balayées suivant deux directions (a, t) indépendantes l'une de l'autre dans le sens linéaire,

b) au moins une division de mesure (11) est balayée suivant une direction (a) qui présente une composante le long de l'axe de rotation (A), et

c) le balayage est effectué à au moins trois endroits espacés les uns des autres dans une direction périphérique (U) entourant l'axe de rotation (A).

**29.** Procédé selon la revendication 28, **caractérisé en ce qu'**il sert à déterminer ou à compenser les écarts individuels de l'élément rotatif.

**30.** Procédé selon la revendication 28 ou 29, **caractérisé en ce que** les deux divisions de mesure (11, 12; 11, 17) sont balayées suivant deux directions (a, t) mutuellement perpendiculaires.

**31.** Procédé selon la revendication 30, **caractérisé en ce qu'**une division de mesure (11) est balayée suivant une direction (a) parallèle à l'axe de rotation (A) et l'autre division de mesure est balayée dans la direction tangentielle (t) par rapport à l'axe de rotation (A).

**32.** Procédé selon une des revendications 28 à 31, **caractérisé en ce que** l'on utilise des divisions incrémentales en tant que divisions de mesure (11, 12, 17).

**33.** Procédé selon une des revendications 28 à 32, **caractérisé en ce que** le balayage de la mesure matérialisée (1) produit six signaux de sortie qui, en tant que grandeurs mesurées, représentent six écarts individuels ($e_x$, $e_y$, $e_z$, $\alpha$, $\beta$, $\delta$) indépendants de l'axe de rotation (A).

**34.** Procédé selon une des revendications 28 à 33, **caractérisé en ce que** la direction de mesure résultant des deux directions de mesure (a, t) se situe en chaque point de mesure sur une droite qui est gauchie par rapport à l'axe de rotation (A).

**35.** Procédé selon une des revendications 28 à 34, **caractérisé en ce que** pour la mise en oeuvre du procédé, la mesure matérialisée (1) est déplacée d'au moins une révolution par rapport aux têtes de mesure (2, 3, 4).

**36.** Procédé selon une des revendications 28 à 35, utilisant un dispositif selon une des revendications 1 à 27.

**37.** Procédé selon la revendication 36, utilisant un dispositif selon la revendication 19 ou 20 et la revendication 21, **caractérisé en ce que** les grandeurs mesurées ($w_2$, $w_4$, $w_6$) des têtes de mesure (3) prévues pour le balayage de la division de mesure (11) sont combinées entre elles pour former des termes de deuxième ordre, et **en ce que** les grandeurs mesurées ($w_1$, $w_3$, $w_5$) des têtes de mesure (4) prévues pour le balayage de l'autre division de mesure (12) sont prises en compte de façon linéaire dans le calcul de l'angle de rotation.

**38.** Procédé selon la revendication 37, **caractérisé en ce que** les grandeurs mesurées ($w_2$, $w_4$, $w_6$) de têtes de mesure (3) prévues pour le balayage axial de la division de mesure (11) sont combinées entre elles pour former des termes de deuxième ordre dans les grandeurs mesurées, et **en ce que** les grandeurs mesurées ($w_1$, $w_3$, $w_5$) de têtes de mesure (4) prévues pour le balayage tangentiel de l'autre division de mesure (12) sont prises en compte de façon linéaire dans le calcul de l'angle de rotation.

# Fig.1

# Fig. 2

# Fig. 3

# Fig. 4

# Fig. 5

# Fig. 6a

S

A

H

2

20

20

2

2

20

# Fig. 6b

2

2

1

H

10

2

# Fig. 7

# Fig. 8

Fig. 9

# Fig. 10

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3637410 C2

**In der Beschreibung aufgeführte Nicht-Patentliteratur**

- Fachbuch Werkzeugmaschinen und Fertigungssysteme. VDI-Verlag, 1996, vol. 4, 149 ff